(19) Europäisches Patentamt
European Patent Office
Office européen des brevets

(11) EP 1 230 291 B1

(12) # FASCICULE DE BREVET EUROPEEN

(45) Date de publication et mention de la délivrance du brevet:
**21.12.2005 Bulletin 2005/51**

(21) Numéro de dépôt: **00966278.4**

(22) Date de dépôt: **04.10.2000**

(51) Int Cl.[7]: **C08G 73/10**, H01M 8/10, C08J 5/22

(86) Numéro de dépôt international:
**PCT/FR2000/002752**

(87) Numéro de publication internationale:
**WO 2001/025312 (12.04.2001 Gazette 2001/15)**

(54) **POLYIMIDES SULFONES, MEMBRANES PREPAREES AVEC CEUX-CI ET DISPOSITIF DE PILE A COMBUSTIBLE COMPORTANT CES MEMBRANES**

SULFONIERTE POLYIMIDE, DAMIT HERGESTELLTE MEMBRANE UND BRENNSTOFFZELLE MIT DIESER MEMBRANE

SULPHONATED POLYIMIDES, MEMBRANES PREPARED WITH SAME AND FUEL CELL DEVICE COMPRISING SAID MEMBRANES

(84) Etats contractants désignés:
**AT BE CH CY DE DK ES FI FR GB GR IE IT LI LU MC NL PT SE**

(30) Priorité: **04.10.1999 FR 9912356**

(43) Date de publication de la demande:
**14.08.2002 Bulletin 2002/33**

(73) Titulaires:
- **COMMISSARIAT A L'ENERGIE ATOMIQUE**
  **75752 Paris Cédex 15 (FR)**
- **CENTRE NATIONAL DE LA RECHERCHE SCIENTIFIQUE (CNRS)**
  **75794 Paris Cedex 16 (FR)**

(72) Inventeurs:
- **PINERI, Michel**
  **F-38330 Montbonnot (FR)**
- **GEBEL, Gérard**
  **F-38120 Saint-Egrève (FR)**
- **CORNET, Nathalie**
  **ST MICHEL SUR ORGE (FR)**
- **JOUSSE, Franck**
  **F-37000 Tours (FR)**
- **MERCIER, Régis**
  **F-69540 Irigny (FR)**

(74) Mandataire: **Audier, Philippe André et al**
**Brevatome,**
**3, rue du Docteur Lancereaux**
**75008 Paris (FR)**

(56) Documents cités:
**FR-A- 2 748 485**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a trait à des polyimides sulfonés, plus précisément à des polyimides sulfonés à durée de vie améliorée qui trouvent, en particulier, leur application dans la préparation de membranes échangeuses d'ions, conductrices ioniques, notamment destinées aux piles à combustible, en particulier aux piles à combustible à basses températures, c'est-à-dire fonctionnant généralement depuis la température ambiante jusqu'à environ 100°C.

En conséquence, l'invention a également trait aux membranes préparées avec lesdits polyimides sulfonés à durée de vie améliorée, et à un dispositif de pile à combustible, en particulier du type à électrolyte solide, comprenant au moins une desdites membranes.

Le domaine technique de l'invention peut ainsi être défini comme celui des piles à combustible, en particulier à piles à combustible du type à électrolyte solide.

Les piles à combustible du type à électrolyte polymère solide trouvent, en particulier, leur application dans les véhicules électriques qui font actuellement l'objet de nombreux programmes de développement, afin d'apporter une solution à la pollution causée par les véhicules à moteur thermique.

Les piles à combustible à électrolyte polymère solide pourraient permettre, en jouant le rôle de convertisseur d'énergie électrochimique, associé à un réservoir d'énergie embarquée, par exemple de l'hydrogène ou un alcool, de surmonter les problèmes, notamment d'automobile, de temps de recharge et d'autonomie, liés à l'utilisation de batteries dans les véhicules électriques.

L'assemblage schématique d'une pile à combustible, permettant la production d'énergie électrique, est représenté en partie sur la figure 1 jointe.

L'élément essentiel d'une telle pile est une membrane de type échangeuse d'ions formée d'un électrolyte solide polymère (1), sert à séparer le compartiment anodique (2), où se produit l'oxydation du combustible, tel que l'hydrogène $H_2$ (4), selon le schéma :

$$2H_2 \rightarrow 4H^+ + 4e^-,$$

du compartiment cathodique (3), où l'oxydant, tel que l'oxygène de l'air $O_2$ (5) est réduit, selon le schéma :

$$O_2 + 4H^+ + 4e^- \rightarrow 2H_2O,$$

avec production d'eau (6), tandis que l'anode et la cathode sont reliées par un circuit extérieur (10). L'eau ainsi produite circule entre les deux compartiments par électro-osmose et par diffusion (flèches 11, 12).

Les électrodes volumiques (13), placées de part et d'autre de la membrane, comprennent généralement une zone active (14) et une zone diffusionnelle (15). La zone active est constituée de graphite poreux recouvert de grains de métal noble (16), tel que le platine, et un mince dépôt de polymère conducteur ionique, de structure similaire à celle de la membrane, permet le transport ionique. La zone diffusionnelle (15) est constituée d'un poreux rendu hydrophobe par l'intégration d'un polymère hydrophobe, tel que le PTFE. Le caractère hydrophobe permet l'évacuation de l'eau liquide.

Les protons produits à l'anode, par oxydation, par exemple de l'hydrogène en surface des grains de platine, sont transportés (9) au travers de la membrane jusqu'à la cathode où ils se recombinent avec les ions produits par la réduction, par exemple de l'oxygène de l'air pour donner de l'eau (6).

Les électrons, ainsi produits (17), permettent d'alimenter, par exemple, un moteur électrique (18) placé dans le circuit extérieur (10), avec comme seul sous-produit de la réaction, de l'eau.

L'ensemble membrane et électrodes est un assemblage très mince d'une épaisseur de l'ordre du millimètre et chaque électrode est alimentée par l'arrière, par exemple à l'aide d'une plaque cannelée, par les gaz.

Les densités de puissance obtenues par cette recombinaison et qui sont généralement de l'ordre de 0,5 à 2 $W/cm^2$, dans le cas où l'on met en oeuvre de l'hydrogène et de l'oxygène, nécessitent l'association de plusieurs de ces structures électrode volumique-membrane-électrode volumique pour obtenir, par exemple les 50 kW nécessaires à un véhicule électrique standard.

Autrement dit, il est nécessaire d'assembler un nombre important de ces structures, dont les surfaces élémentaires peuvent être de l'ordre de 20 x 20 $cm^2$, pour obtenir la puissance voulue, notamment dans le cas où la pile à combustible est mise en oeuvre dans un véhicule électrique.

Dans ce but, chaque ensemble formé de deux électrodes et d'une membrane, définissant une cellule élémentaire de la pile à combustible, est ainsi disposé entre deux plaques étanches (7, 8) qui, d'une part, assurent la distribution de l'hydrogène, côté anode et, d'autre part, de l'oxygène côté cathode. Ces plaques sont appelées des plaques bipolaires.

La membrane conductrice ionique est généralement une membrane organique contenant des groupes ioniques qui, en présence d'eau, permettent la conduction des protons (9) produits à l'anode par oxydation de l'hydrogène.

L'épaisseur de cette membrane est de quelques dizaines à quelques centaines de microns et résulte d'un compromis entre la tenue mécanique et la chute ohmique. Cette membrane permet également la séparation des gaz. La résistance chimique et électrochimique de ces membranes permet, en général, un fonctionnement en pile sur des durées supérieures à 1 000 heures.

Le polymère constituant la membrane doit donc remplir un certain nombre de conditions relatives à ses propriétés mécaniques, physico-chimiques et électriques.

Le polymère doit tout d'abord pouvoir donner des films minces, de 50 à 100 micromètres, denses, sans défauts. Les propriétés mécaniques, module de contrainte à la rupture, ductilité, doivent le rendre compatible avec les opérations d'assemblage comprenant, par exemple, un serrage entre des cadres métalliques.

Les propriétés doivent être préservées en passant à l'état sec à l'état humide.

Le polymère doit avoir une bonne stabilité thermique à l'hydrolyse et présenter une bonne résistance à la réduction et à l'oxydation jusqu'à 100°C. Cette stabilité s'apprécie en terme de variation de résistance ionique, et en terme de variation des propriétés mécaniques.

Le polymère doit enfin posséder une forte conductivité ionique, cette conductivité est apportée par des groupements acides forts, tels que des groupements acides phosphoriques, mais surtout sulfoniques reliés à la chaîne du polymère. De ce fait, ces polymères seront généralement définis par leur masse équivalente, c'est-à-dire par le poids de polymère en gramme par équivalent acide.

A titre d'exemple, les meilleurs systèmes développés actuellement sont capables de fournir une puissance spécifique de 1 $W.cm^{-2}$, soit une densité de courant de 2 $A.cm^{-2}$ pour 0,5 Volts.

Depuis 1950, de nombreuses familles de polymères sulfonés ont été testés comme membranes sans qu'il soit actuellement possible d'établir avec certitude des relations entre structure chimique, morphologie du film et performances.

On a tout d'abord mis en oeuvre des résines de type phénolique sulfonées préparées par sulfonation de produits polycondensés, tels que les polymères phénol-formaldéhyde.

Les membranes préparées avec ces produits sont peu coûteuses, mais n'ont pas une stabilité à l'hydrogène suffisante à 50-60°C pour des applications de longue durée.

On s'est ensuite tourné vers les dérivés du polystyrène sulfoné qui présentent une stabilité supérieure à celle des résines phénoliques sulfonées, mais ne peuvent être utilisés à plus de 50-60°C.

Les meilleurs résultats sont actuellement obtenus avec des copolymères dont la chaîne principale linéaire est perfluorée et dont la chaîne latérale porte un groupement acide sulfonique.

Ces copolymères sont disponibles dans le commerce sous la marque déposée de NAFION® de la Société Du Pont, ou ACIPLEX-S® de la Société Asahi Chemical, d'autres sont expérimentaux, produits par la Société DOW pour la fabrication de la membrane dénommée "XUS".

Ces produits ont fait l'objet de nombreux développements et conservent leurs propriétés plusieurs milliers d'heures entre 80 et 100°C avec des densités de courant dépendant des pressions partielles des gaz et de la température. La densité de courant est typiquement de 1 $A.cm^{-2}$ à 0,7 Volts pour le Nafion® 112 avec une épaisseur de 50 $\mu m$.

La stabilité thermique de ces structures, c'est-à-dire, dans le cas présent, la capacité de résister à l'hydrolyse acide, et la dégradation par des radicaux libres produits au cours du fonctionnement de la pile, à une température comprise entre 60 et 100°C, pendant plusieurs milliers d'heures, est démontrée.

Aux critères déjà indiqués plus haut, qui doivent être remplis par la membrane, il convient d'ajouter la résistance à l'oxydation au contact de l'oxygène du compartiment cathodique et la résistance à la réduction en présence d'$H_2$.

D'autre part, dans l'optique du développement de piles à combustible utilisables pour la traction automobile, un autre problème essentiel, désormais bien identifié par les experts, est le coût de la membrane, ce dernier est avec celui des plaques bipolaires le facteur prépondérant influençant le prix de revient de la pile à combustible.

En 1995, le coût des membranes produites ou en développement est de l'ordre de 3 000 à 3 500 $F/m^2$ et l'on estime qu'il faut diviser ce coût par 10, voire par 20, pour assister à un développement industriel des piles à combustible pour l'industrie automobile.

Dans une perspective d'abaissement des coûts, des poly 1,4-(diphényl-2,6)-phényléther sulfonés sur la chaîne principale, des polyéther-sulfones et polyéther-cétones ont été synthétisés et testés sans réellement rivaliser avec les membranes fluorées en ce qui concerne les performances instantanées et la durabilité.

Afin de fournir des membranes répondant aux conditions, déjà mentionnées ci-dessus, relatives notamment à leurs propriétés mécaniques, physico-chimiques et électriques, tout en présentant un coût de fabrication nettement plus faible que celui, prohibitif des membranes perfluorées, décrits plus haut, ont été développés de nouveaux polymères en polyimides sulfonés qui sont décrits dans le document FR-A-2 748 485. La possibilité d'utilisation de membranes en ces polyimides sulfonés dans une pile à combustible a été amplement démontrée par un fonctionnement

pendant plus de 3 000 heures avec de bonnes performances.

En outre, il a été montré que les membranes obtenues à partir de polyimides sulfonés ne subissaient que peu de dégradation par les radicaux libres formés au cours du fonctionnement en pile.

En effet, au cours du fonctionnement de ces membranes en pile à combustible, des radicaux libres se forment à partir du $H_2O_2$, résultant de la réduction incomplète - à 2 électrons - de l'oxygène et de la réaction de cette eau oxygénée avec des impuretés au sein de la membrane. Les radicaux $OH^{\cdot}$ et $OH_2^{\cdot}$, ainsi formés réagissent avec les chaînes non perfluorées, entraînant la rupture des liaisons C-C.

La rupture des liaisons entraîne à son tour une perte des propriétés mécaniques et une perte de conduction ionique par élution de courtes séquences contenant des fonctions sulfoniques. Ce type de dégradation semble se produire avec la plupart des structures des polymères non perfluorés et seules des solutions partielles permettant de limiter l'élution des groupes sulfoniques, par exemple, une réticulation, ont été mises en place.

Un test simple montrant la sensibilité aux radicaux libres des polymères, consiste à immerger les membranes dans une solution de $H_2O_2$ contenant des ions ferreux à une température de 80°C.

Un résultat similaire a été indiqué dans le document WO-A-99/10165 pour des membranes obtenues à partir de polyimides contenant des dianhydrides phtaliques.

Cependant, si ces membranes obtenues à partir de polyimides sulfonés ne subissent pas de dégradation par les radicaux libres formés au cours du fonctionnement en pile, elles peuvent par contre se dégrader par hydrolyse des polyimides en présence d'eau.

Cette réaction d'hydrolyse induit de manière semblable des cassures de chaînes et l'élution des fonctions sulfoniques.

L'hydrolysé constitue donc un des facteurs de dégradation majeur des polyimides.

Il existe donc un besoin pour des polyimides sulfonés dont la résistance à l'hydrolyse soit améliorée.

Le but de la présente invention est de fournir un polymère de polyimide sulfoné qui réponde à ce besoin.

Le but de la présente invention est encore de fournir un polymère de polyimide sulfoné qui ne présente pas les inconvénient, limitations, défauts et désavantages des polyimides sulfonés de l'art antérieur et qui résolvent les problèmes de l'art antérieur.

Ce but et d'autres encore sont atteints, conformément à l'invention par un polyimide sulfoné séquencé formé par les blocs ou séquences représentés par les formules ($I_x$) et ($I_y$) suivantes :

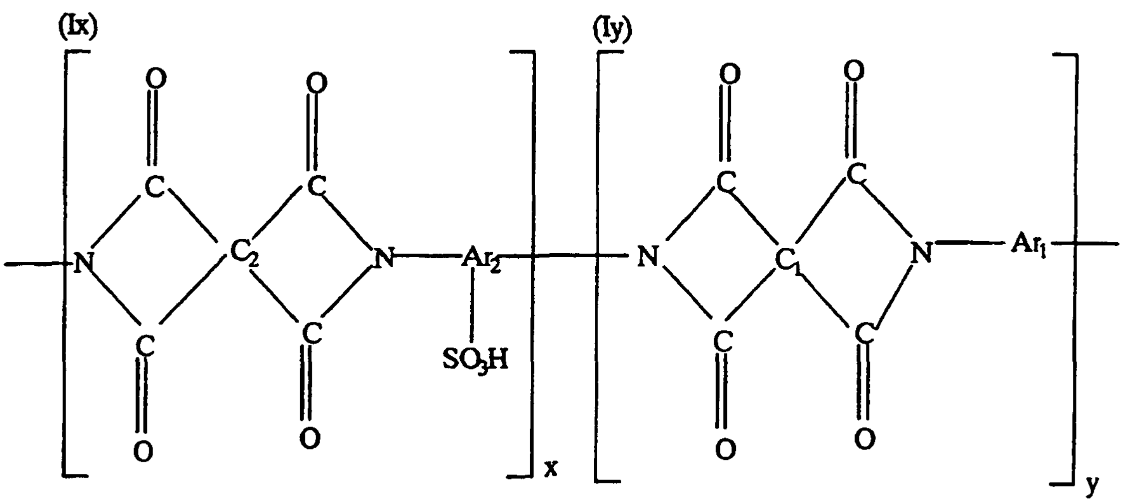

dans lesquelles :

- x est un nombre réel de 5 à 10 ; et
- y est un nombre réel supérieur ou égal à x ;
- et les groupes $C_1$ et $C_2$ peuvent être identiques ou différents et représentent chacun un groupe tétravalent comprenant au moins un cycle aromatique carboné, éventuellement substitué, ayant de 6 à 10 atomes de carbone et/ou un hétérocycle à caractère aromatique, éventuellement substitué, ayant de 5 à 10 atomes et comprenant un ou plusieurs hétéroatomes choisis parmi S, N et 0 ; $C_1$ et $C_2$ formant chacun, avec les groupes imides voisins, des cycles à 5 ou 6 atomes,
- les groupes $Ar_1$ et $Ar_2$ peuvent être identiques ou différents et représentent chacun un groupe divalent comprenant

au moins un cycle aromatique carboné, éventuellement substitué, ayant de 6 à 10 atomes de carbone et/ou un hétérocycle à caractère aromatique, éventuellement substitué, ayant de 5 à 10 atomes et comprenant un ou plusieurs hétéroatomes choisi parmi S, N et O ; au moins un desdits cycles aromatiques carbonés et/ou hétérocycle de $Ar_2$ étant, en outre, substitué par au moins un groupe acide sulfonique.

De manière surprenante, il a été montré que les réactions et hydrolyse qui affectent normalement les polyimides sulfonés étaient considérablement réduites lorsque l'on allongeait la longueur de la séquence ou bloc qui contient les groupes sulfoniques, c'est-à-dire de la séquence ou bloc hydrophile.

Il s'est avéré que la sensibilité à l'hydrolyse était considérablement réduite pour des polymères dont les blocs ou séquences hydrophiles étaient constitués d'un nombre d'unités de répétition (correspondant à la valeur de x) de 5 à 10.

Cet allongement de la séquence hydrophile induit un allongement semblable de la séquence hydrophobe, c'est-à-dire de la séquence ou bloc qui ne contient pas de groupes sulfoniques.

La longueur de ces blocs ou séquences est définie par le nombre y qui représente le nombre d'unités de répétition des blocs hydrophobes. y est supérieur ou égal à x. Ce nombre y sera, de ce fait, selon l'invention, par exemple au moins égal à 5, de préférence y a une valeur de 5 à 40.

Le polymère selon l'invention mis, par exemple, sous forme de membranes, présente une grande stabilité mécanique, c'est-à-dire qu'il conserve toutes ses propriétés mécaniques, même après une durée prolongée à de l'eau, en particulier aucune fissure n'est observée, même après plusieurs centaines d'heures à 80°C dans l'eau.

En d'autres termes, la fragilisation des polymères selon l'invention, mis par exemple sous la forme de membranes, et qui résulte de leur vieillissement, sous l'effet des phénomènes d'hydrolyse, est notablement étonnament réduite par rapport aux polyimides sulfonés qui ne répondent pas aux conditions spécifiques relatives aux longueurs des blocs hydrophiles, définissant les polyamides sulfonés spécifiques selon l'invention.

En outre, l'allongement des séquences ou blocs hydrophiles des polymères, selon l'invention, induit également une forte diminution de la perte de masse et de la chute de conductivité, qui est couramment observée avec les polymères de l'art antérieur, n'ayant pas une telle longueur des séquences hydrophiles et, par voie de conséquence, hydrophobes.

Il s'est avéré, en outre, que la résistance du polymère selon l'invention était particulièrement élevée pour une valeur de x, de préférence, de 5 à 9. Cette valeur de x correspond à une valeur de y de 5 à 10 ; la relation $y \geq x$ étant, bien entendu, vérifiée.

Le copolymère selon l'invention peut être défini comme un copolyimide sulfoné séquencé et répond, de préférence, à la formule générale suivante (I) :

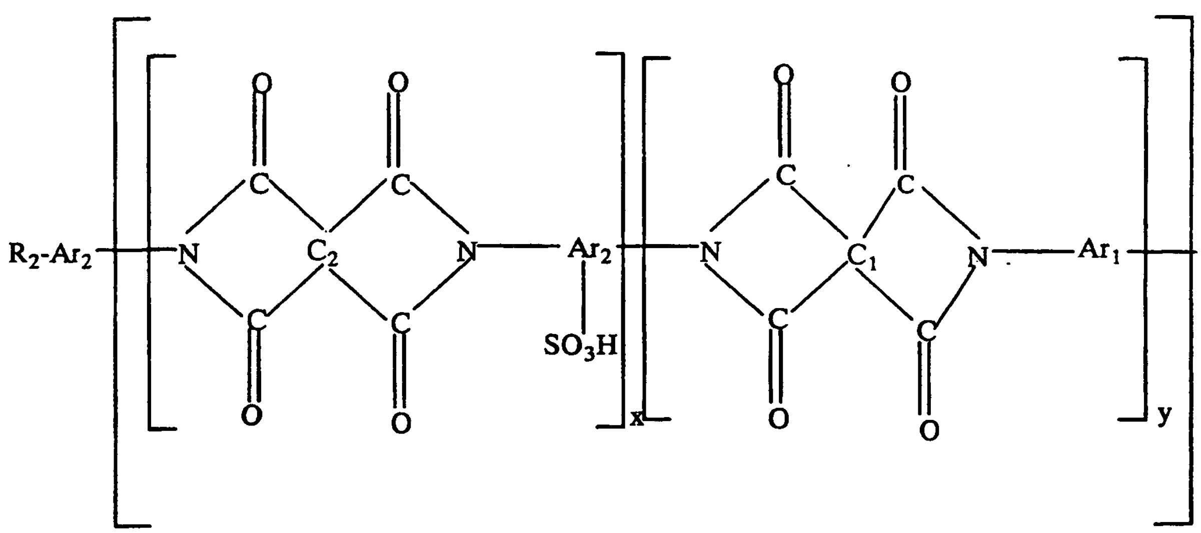

dans laquelle $C_1$, $C_2$, $Ar_1$ et $Ar_2$, x et y ont la signification déjà donnée ci-dessus et où chacun des groupes $R_1$ et $R_2$ représente $NH_2$, ou un groupe de formule :

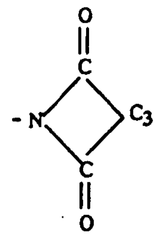

où $C_3$ est un groupe divalent comprenant au moins un cycle aromatique carboné, éventuellement substitué, ayant de 6 à 10 atomes de carbone et/ou un hétérocycle à caractère aromatique, éventuellement substitué, ayant de 5 à 10 atomes et comprenant un ou plusieurs hétéroatomes choisis parmi S, N et O, $C_3$ formant avec le groupe imide voisin un cycle à 5 ou 6 atomes.

Dans la formule (I) ci-dessus, en outre :

- z représente un nombre, de préférence 1 à 10, de préférence encore de 2 à 6.

Le poids moléculaire du polyimide selon l'invention est généralement de 10 000 à 100 000, de préférence de 20 000 à 80 000.

Le poids moléculaire équivalent du polyimide selon l'invention est, de préférence, de 400 à 2500, de préférence encore de 500 à 1 200.

Le poids moléculaire équivalent est défini par le poids de polymère en grammes par équivalent acide.

De ce fait, les nombres x et y seront choisis, de telle sorte que le poids moléculaire équivalent soit généralement de 400 à 2 500, de préférence encore de 500 à 1 200.

On a vu que des copolyimides sulfonés sont décrits de manière générale dans le document FR-A-2 748 485. Les copolymères décrits dans ce document ne présentent pas de résistance à l'hydrolyse et il n'est donné aucune indication sur la nature des polymères mis en oeuvre dans ce document qui peuvent être aussi bien séquencés, alternés, que statistiques.

Dans ce document, la longueur des séquences ou blocs hydrophiles et la longueur correspondante des blocs hydrophobes peut varier entre de larges limites et n'est pas maîtrisée : ainsi x et y peuvent être choisis dans un très large intervalle allant respectivement de 1 à 30 et de 1 à 20.

Ce document ne mentionne ni ne suggère en aucune manière, d'une part, que la longueur des séquences hydrophiles est un des facteurs essentiels influençant la résistance à l'hydrolyse des polyimides sulfonés et, d'autre part, que cette résistance à l'hydrolyse est améliorée de manière surprenante en choisissant une longueur des séquences hydrophiles supérieure à un nombre spécifique d'unités ou motifs de répétition et se situant dans une plage étroite pour x allant de 5 à 10 et, de préférence, de 5 à 9 ; cette longueur des séquences hydrophiles influençant par voie de conséquence la longueur des séquences hydrophobes, définie par y qui se trouve dans les plages, mentionnées plus haut.

Outre la résistance à l'hydrolyse sur une durée prolongée, qui se manifeste par l'absence de vieillissement et donc le maintien des propriétés mécaniques et de conductivité dans le temps, les polyimides sulfonés selon l'invention présentent toutes les propriétés avantageuses des polyimides sulfonés qui sont, par exemple, décrites dans le document FR-A-2 748 485, c'est-à-dire que les propriétés avantageuses connues des polyimides sulfonés ne sont pas affectées par le fait que les polyimides sulfonés selon l'invention se trouvent pourvus, à l'inverse des polyimides sulfonés de l'art antérieur d'une excellente résistance à l'hydrolyse.

Au contraire, les propriétés avantageuses sont conservées sur une longue durée.

Ainsi, les polymères selon l'invention présentent toutes les propriétés nécessaires à la réalisation de membranes et en particulier de membranes échangeuses de cations, spécifiquement conçues pour les piles à combustibles, et leurs performances sont essentiellement compatibles avec une application dans une pile à combustible.

L'invention concerne donc une membrane comprenant le polyimide sulfoné selon l'invention.

En particulier, ces copolymères peuvent être facilement mis sous la forme de films ou de membranes d'une épaisseur adéquate.

Ces polymères ont une capacité d'échange d'ions très élevée, supérieure à 0,4 meq/g, par exemple, de 0,8 à 2,5 meq/g.

Les membranes comprenant ces polymères ont également une grande stabilité thermique, notamment, à l'hydrolyse acide à haute température, c'est-à-dire pour les membranes les plus stables jusqu'à une température pouvant atteindre par exemple 100°C, et ce, pendant une longue durée pouvant atteindre, par exemple, 3 000 heures.

Ces conditions sont les conditions d'utilisation pouvant survenir dans les piles à combustible où les membranes, décrites dans ce document, sont essentiellement mises en oeuvre.

De même, les membranes, comprenant le polymère selon l'invention, ont d'excellentes résistances à la réduction et à l'oxydation.

Enfin, comme cela est décrit plus loin, les polyimides selon l'invention sont préparées de manière simple, par des procédés éprouvés sur le plan industriel et à partir de matières premières disponibles et de faible coût. De ce fait, les membranes obtenues, ainsi que les piles à combustibles qui comprennent ces membranes, bien qu'elles présentent une longévité étonnament accrue, ne voient-elles pas leur prix en souffrir.

L'invention concerne donc un dispositif de pile à combustible comprenant au moins une membrane selon l'invention.

L'invention va maintenant être décrite plus en détail, en référence aux dessins joints, dans lesquels :

- la figure 1 représente schématiquement une pile à combustible comprenant plusieurs cellules élémentaires avec un assemblage Electrode-Membrane-Electrode, ainsi que des plaques bipolaires ;
- la figure 2 est un graphique qui donne l'évolution de la conductivité C en S/cm en fonction du temps t en heures pour des polymères ayant des longueurs de blocs hydrophiles différentes ; à savoir blocs de 3 unités de répétition (courbe A) ; blocs de 1 unité, polymère statistique (courbe B) ; bloc de 9 unités (courbe C) ; blocs de 5 unités (courbe D) ;
- la figure 3 est un graphique (diagramme d'impédance) qui donne $-I_m(Z)$ en fonction de $Re(Z)$ pour une membrane en un polymère présentant des blocs hydrophiles à 9 unités de répétition, avant dégradation ;
- les figures 4A et 4B sont des diagrammes d'impédances (NYQUIST) pour des membranes en un polymère présentant des blocs hydrophiles à 9 unités de répétition en fonction du temps de vieillissement ; à savoir : 355 heures (courbe A) ; 543 heures (courbes B) 704 heures (courbe C) : 1 175 heures (courbe D) ; 2 008 heures (courbe E) et enfin 2 450 heures (courbe F) ;
- la figure 5 est un graphique qui illustre la perte de masse P en % en fonction du temps d'immersion dans l'eau (t) en heures pour un polyimide sulfoné dont la séquence hydrophile comprend 9 unités de répétition.

Dans les formules ($I_x$), ($I_y$) et (I) citées ci-dessus, $C_1$ et $C_2$ peuvent être identiques ou différents et représentent chacun, par exemple, un cycle benzénique éventuellement substitué, par un ou deux substituant(s) choisi(s) parmi les groupes alkyles et alcoxy de 1 à 10 C et les atomes d'halogène ; ou plusieurs cycles benzéniques éventuellement substitués par un ou plusieurs substituant(s) choisi(s) parmi les groupes alkyle et alcoxy de 1 à 10 C et les atomes d'halogène, par exemple de 2 à 4 cycles, reliés entre eux par une simple liaison ou par un groupe divalent.

Ledit groupe divalent est choisi par exemple parmi :

- un groupe divalent dérivé d'un groupe alkyle linéaire ou ramifié (par exemple un groupe alkylidène ou alkylène) de 1 à 10 C éventuellement substitué, de préférence sur le même carbone, par un ou plusieurs halogènes choisis parmi F, Cl, Br et I et/ou par un ou plusieurs groupes hydroxyle(s), de préférence encore ledit groupe divalent est un groupe divalent dérivé d'un groupe alkyle perfluoré, par exemple alkylène perfluoré.
- un hétéroatome choisi parmi O, S ;
- un groupe

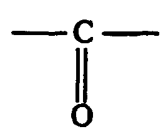

;

un groupe

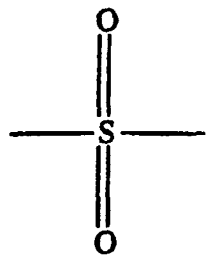

;

un groupe

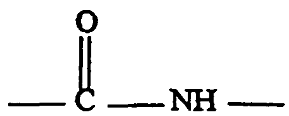

;

un groupe

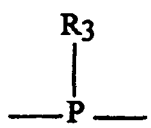

;

un groupe

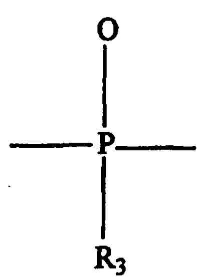

;

un groupe

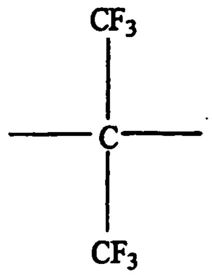

;

un groupe

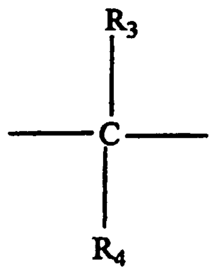

;

un groupe

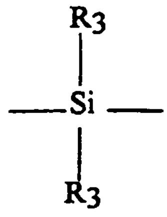

;

un groupe

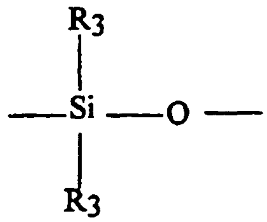

;

où $R_3$ et $R_4$ sont choisis parmi les groupes alkyle de 1 à 10 C tels que méthyle, éthyle, isopropyle, etc.

$C_1$ et $C_2$ peuvent également chacun représenter un groupe carboné polycyclique condensé éventuellement substitué par un ou plusieurs substituant(s) choisi(s) parmi les groupes alkyles et alcoxy de 1 à 10 C et les atomes d'halogène, comprenant par exemple de 2 à 5 cycles benzéniques choisis par exemple parmi le naphtalène, le phénanthrène, le coronène, le pérylène, etc.

$C_1$ et $C_2$ peuvent aussi représenter un hétérocycle ou un hétérocycle condensé, à caractère aromatique tel

que thiophène, pyrazine, pyridine, furanne, quinoléine, quinoxaline, isobenzofuranne, cet hétérocycle étant éventuellement substitué par un ou plusieurs substituants choisis parmi les groupes alkyles (par exemple méthyle, éthyle, isopropyle, etc.) et alcoxy de 1 à 10 C, et les atomes d'halogènes (F, Cl, Br, I).

Parmi les polyimides utilisables dans le cadre de l'invention, on citera ceux dans lesquels $C_1$ est un cycle benzénique et $C_2$ un ensemble de deux cycles benzéniques reliés entre eux par un pont oxygène ; ou $C_1$ est constitué par des cycles benzéniques, de préférence encore par deux cycles benzéniques reliés entre eux par un ou des groupe(s) perfluoroalkylène(s) et $C_2$ est constitué par des cycles benzéniques, de préférence encore par deux cycles benzéniques reliés par un ou des groupe(s) perfluoroalkyle(s) divalent(s) ou perfluoroalkylène(s) ; ou $C_1$ est un cycle benzénique et $C_2$ un cycle naphtalénique ; ou $C_1$ et $C_2$ sont tous deux des cycles naphtaléniques.

$Ar_1$ et $Ar_2$ peuvent être identiques ou différents et représentent chacun par exemple un cycle benzénique divalent à enchaînement meta, ou para ; éventuellement substitué par un ou plusieurs substituants choisis parmi les groupes alkyles et alcoxy de 1 à 10 C tels que méthyle, éthyle, isopropyle, butyle, méthoxy.... et les atomes d'halogène ; ou plusieurs cycles benzéniques éventuellement substitués par un ou plusieurs substituants choisis parmi les groupes alkyles et alcoxy de 1 à 10C et les atomes d'halogènes, par exemple de 2 à 5 cycles, reliés entre eux par une simple liaison ou par un groupe divalent.

Ledit groupe divalent est choisi par exemple parmi :

- un groupe divalent dérivé d'un groupe alkyle linéaire ou ramifié (par exemple un groupe alkylidène ou alkylène) de 1 à 10 C éventuellement substitué, de préférence sur le même carbone par un ou plusieurs halogènes choisis parmi F, Cl, Br et I et/ou par un ou plusieurs groupes hydroxyle(s), de préférence encore ledit groupe divalent est un groupe divalent dérivé d'un groupe alkyle perfluoré, par exemple alkylène perfluoré.
- un hétéroatome choisi parmi O, S ;
- un groupe

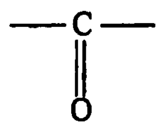

;

un groupe

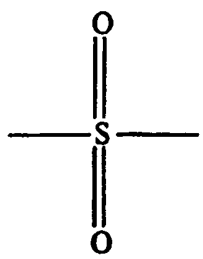

;

un groupe

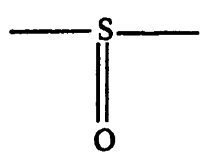

;

un groupe

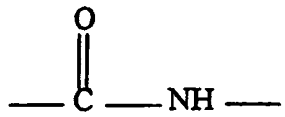 ;

un groupe

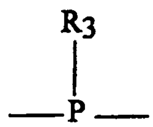 ;

un groupe

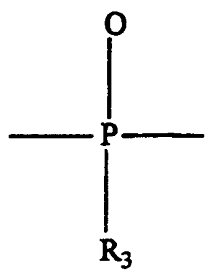 ;

un groupe

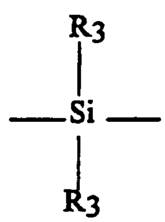 ;

un groupe

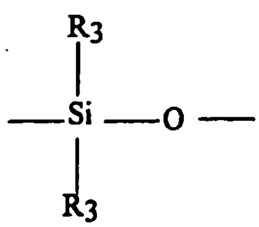 ;

un groupe

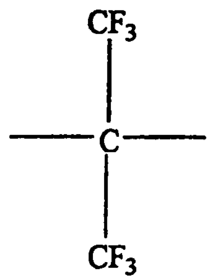

;

un groupe

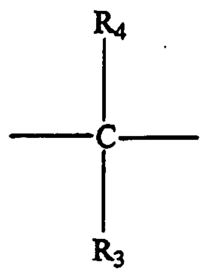

;

où $R_3$ et $R_4$ sont choisis parmi les groupes alkyle de 1 à 10 C tels que méthyle, éthyle, isopropyle, etc.

$Ar_1$ et $Ar_2$ peuvent également chacun représenter un groupe carboné polycyclique condensé éventuellement substitué par un ou plusieurs substituant(s) choisi(s) parmi les groupes alkyles et alcoxy de 1 à 10 C et les atomes d'halogène, comprenant par exemple de 2 à 5 cycles benzéniques, choisis par exemple parmi le naphtalène, le phénanthrène, le coronène, le pérylène, etc.

$Ar_1$ et $Ar_2$ peuvent aussi représenter un hétérocycle ou un hétérocycle condensé à caractère aromatique par exemple thiophène, pyrazine, pyridine, furanne, quinoléine, quinoxaline, isobenzofuranne, cet hétérocycle étant éventuellement substitué par un ou plusieurs substituant(s) choisi(s) parmi les groupes alkyles, et alcoxy de 1 à 10 C, par exemple méthyle, éthyle, isopropyle, méthoxy, et les atomes d'halogènes (F, Cl, Br, I).

Selon l'invention, au moins un des cycles de $Ar_2$, par exemple benzéniques ou polyphényliques ou autres est substitué en outre par un ou plusieurs groupe (s) acide sulfonique.

Les polyimides préférés sont ceux dans lesquels $Ar_1$ est un groupe diphénylméthane et $Ar_2$ est un groupe biphényl-disulfonique ; ou $Ar_1$ est un groupe benzénique, et $Ar_2$ un groupe biphényl-disulfonique ; ou $Ar_1$ est un groupe diphényléther, et $Ar_2$ est un groupe biphényl-disulfonique.

$C_3$ est par exemple un cycle benzénique ou naphtalénique éventuellement substitué par un ou plusieurs substituant(s) choisi(s) parmi les groupes alkyles et alcoxy de 1 à 10 C et les atomes d'halogène.

Des exemples des groupes $C_1$ et $C_2$ sont les suivants :

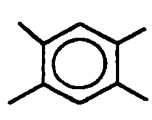 ; 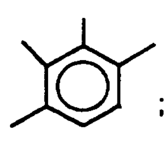 ;

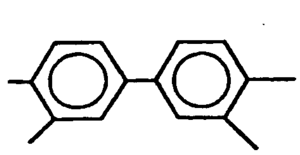 ; 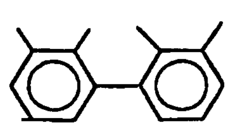 ;

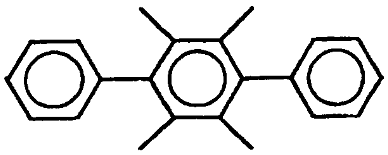 ; 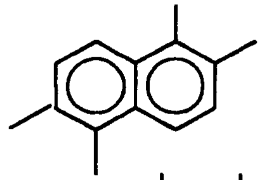 ;

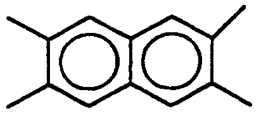 ; 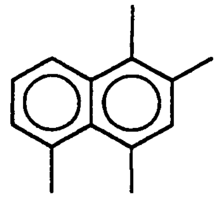 ; 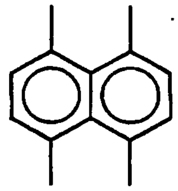 ;

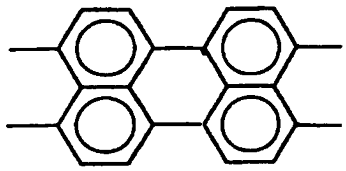 ; 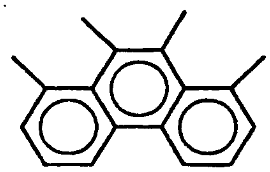 ;

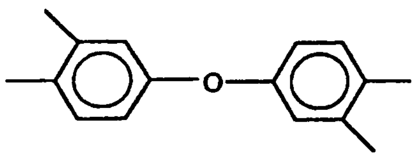 ; 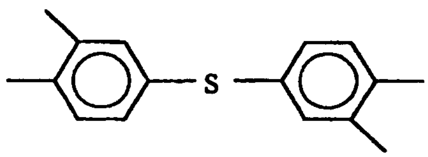

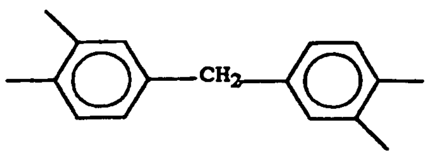 ; 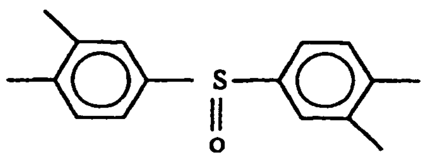

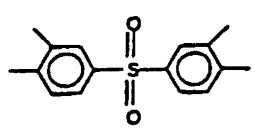

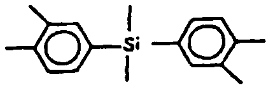 ; 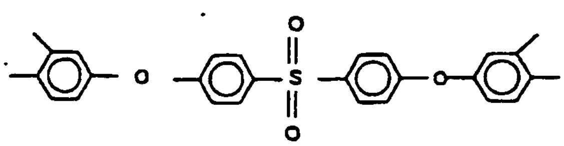

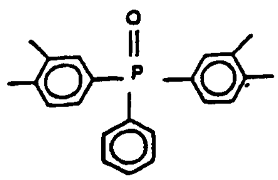 ; 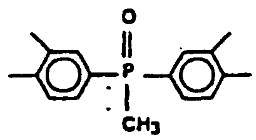

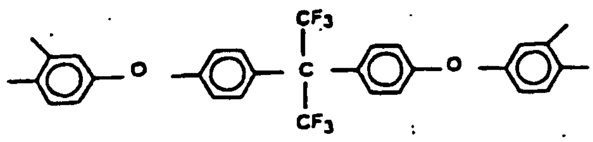 ;

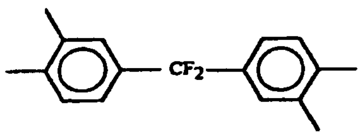 ; 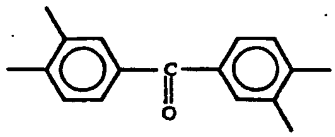 ;

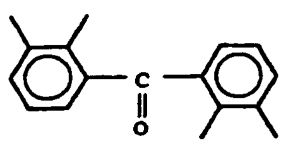 ; 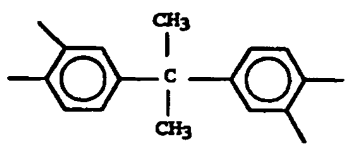 ; 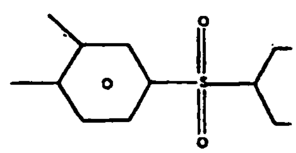

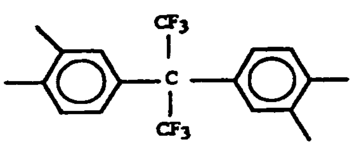 ; 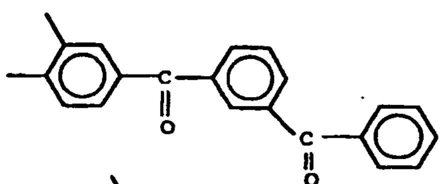 ;

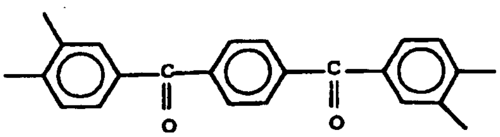 ; 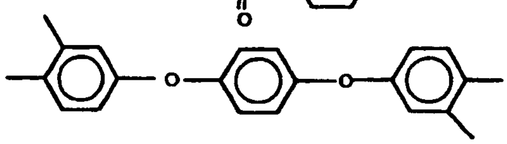 ;

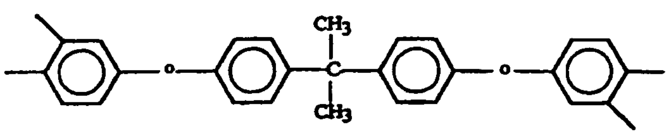 ; 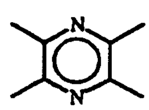 ;

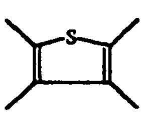 ; 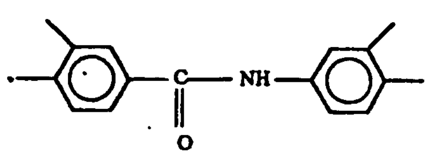

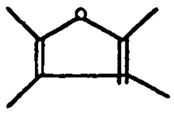 ; 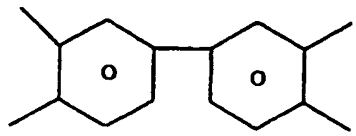

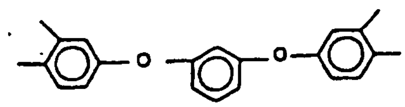

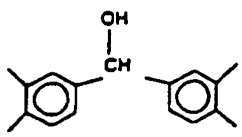 : 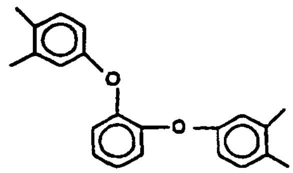

Des exemples des groupes $Ar_1$ sont les suivants :

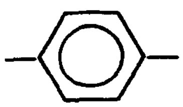 ; 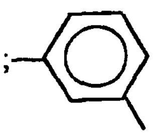 ; 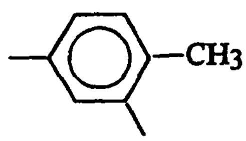 ; 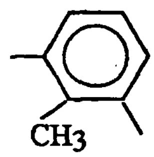 ;

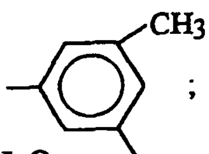 ; 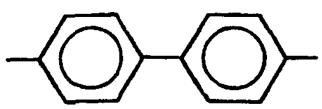 ; 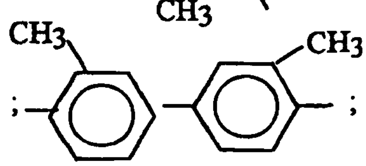 ;

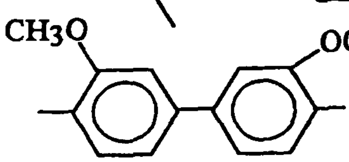 ; 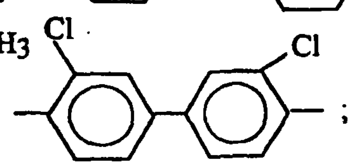 ; 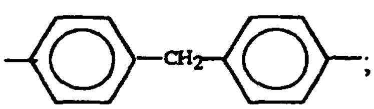 ;

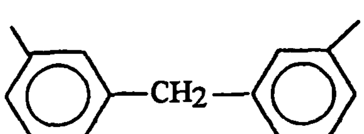 ; 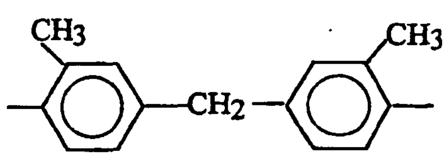 ;

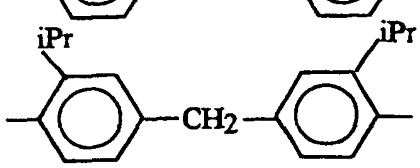 ; 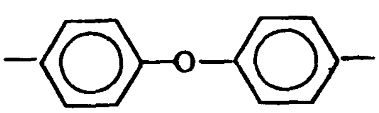 ; 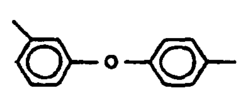

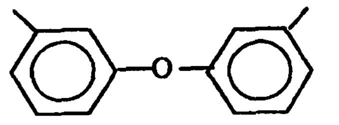 ; 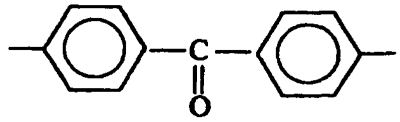 ;

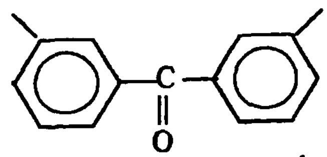 ; 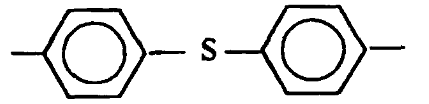 ;

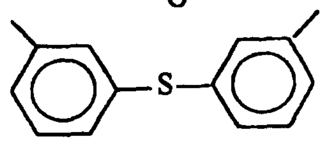 ; 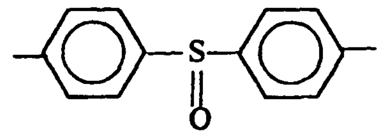 ;

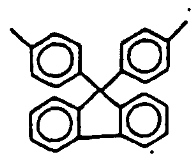 : 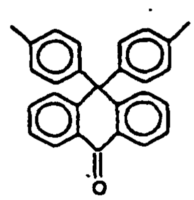

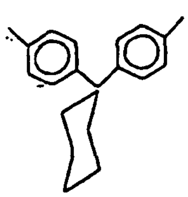 : 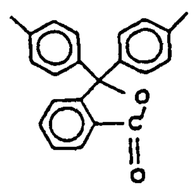 : 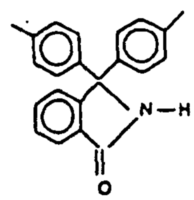

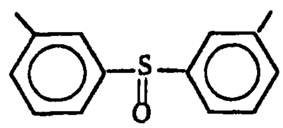 ; 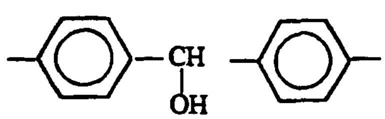 ; 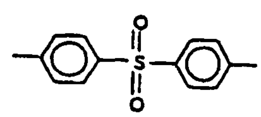

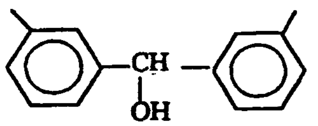 ; 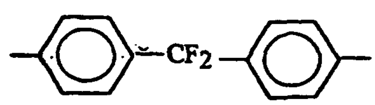 ; 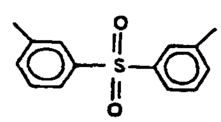

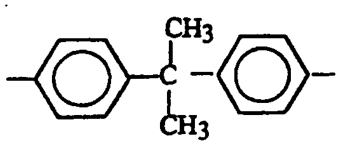 ; 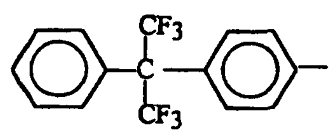 ; 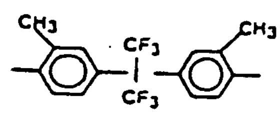

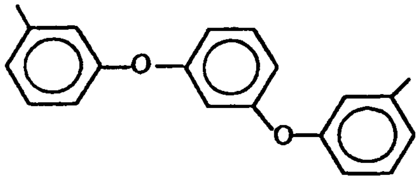 ; 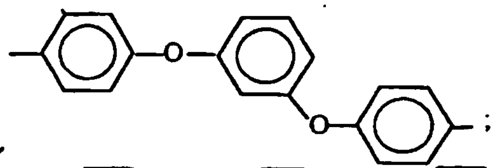 ;

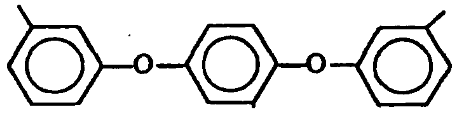 ; 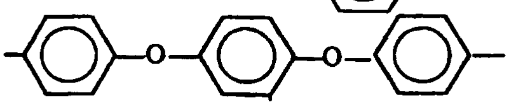

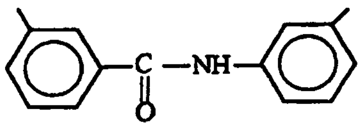 ; 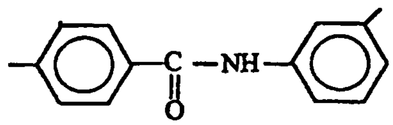 ;

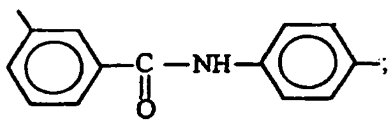 ; 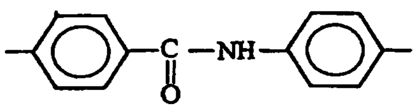 ;

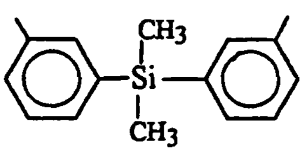 ; 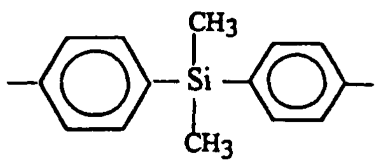 ; 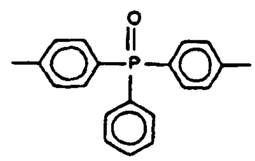

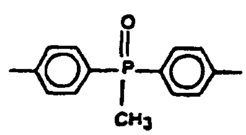 ;

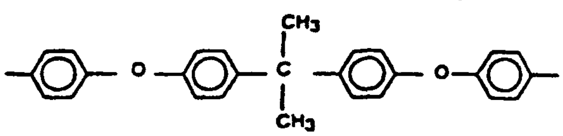 ; 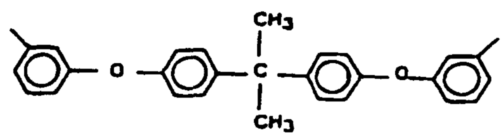

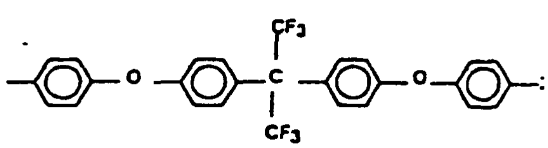 ; 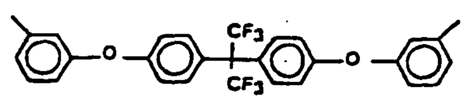

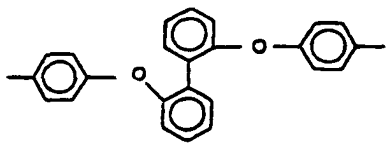 : 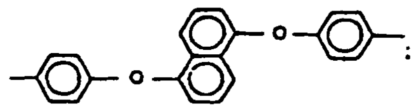 ;

Des exemples des groupes $Ar_2$ sont les suivants :

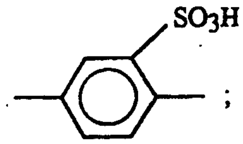 ; 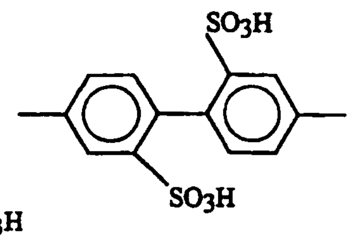 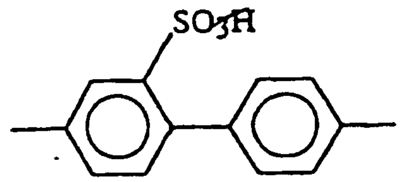

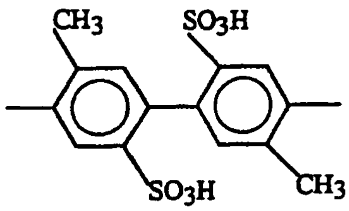

Parmi les groupes $Ar_2$, on peut également citer l'un quelconque des groupes $Ar_1$ cités ci-dessus portant en outre un ou plusieurs groupe(s) $SO_3H$ sur son ou ses cycle(s) et/ou hétérocycle(s).

Des exemples des groupes $C_3$ sont les suivants :

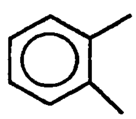 ; 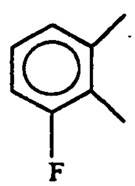 ; 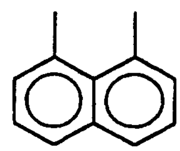

Les polyimides sulfonés selon l'invention peuvent être obtenus par tous les procédés connus de l'homme du métier pour la préparation des polyimides en général.

Des exemples des procédés connus de préparation des polyimides sont notamment les suivants :

- réaction d'un dianhydride et d'une diamine ;
- réaction d'un diacide diester et d'une diamine.

Il est bien évident que les polyimides selon l'invention peuvent être préparés par des procédés qui dérivent des procédés cités ci-dessus ou par d'autres procédés pouvant être mis en oeuvre pour la synthèse des polyimides.

Les adaptations et optimisations nécessaires des procédés connus et décrits dans la littérature peuvent être aisément réalisés par l'homme du métier.

On utilisera de préférence pour préparer les polyimides selon l'invention, la condensation des dianhydrides sur les diamines par une synthèse en deux étapes.

Un tel procédé est couramment mis en oeuvre sur le plan industriel et ne nécessite que de légères adaptations pour permettre la préparation des polyimides selon l'invention.

La synthèse d'un polyimide sulfoné selon l'invention répond généralement au schéma suivant en deux étapes, généralement réalisées dans le même réacteur.

Dans une première étape, on effectue la synthèse du bloc hydrophile du polyimide sulfoné selon l'invention

par polycondensation d'un dianhydride (II) avec une diamine sulfonée (III).

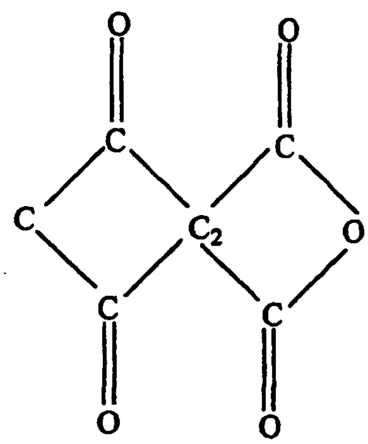

(II)

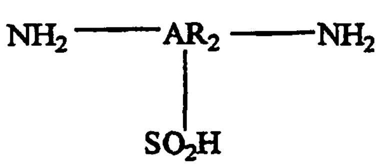

(III)

Ces produits de départ sont des produits facilement disponibles et de faible coût. De ce fait, les polymères préparés, et les membranes obtenues à partir de ces polymères présentent un coût relativement faible.

Parmi les dianhydrides de formule générale (II) où $C_2$ a la signification déjà donnée ci-dessus, on peut citer, à titre d'exemple : les dianhydrides des acides aromatiques tétracarboxyliques suivants : l'acide benzène tétracarboxylique-1,2,3,4, l'acide benzène tétracarboxylique-1,2,4,5, l'acide biphényle-1,1'tétracarboxylique-2,3,5',6' l'acide biphényle-1,1' tétracarboxylique-3,3',4,4', l'acide biphényle-1,1' tétracarboxylique-2,2',3,3', l'acide terphényle-1,1', 1" tétracarboxylique-2',3',5',6', l'acide naphtalène tétracarboxylique-1,2,5,6, l'acide naphtalène tétracarboxylique-2,3,6,7, l'acide naphtalène tétracarboxylique-1,2,4,5, l'acide naphtalène tétracarboxylique-1,4,5,8 (DNTA), l'acide pérylène tétracarboxylique-3,4,9,10, l'acide phénanthrène tétracarboxylique-1,8,9,10, l'acide oxybis-(benzène dicarboxylique-1,2)-4,4' (OPDA), l'acide thiobis-(benzène dicarboxylique-1,2)-4,4', l'acide sulfonylbis(benzène dicarboxylique-1,2)-4,4', l'acide méthylènebis(benzène dicarboxylique-1,2)-4,4', l'acide difluorométhylène-bis(benzène dicarboxylique-1,2)-4,4', l'acide carbonylbis(benzène dicarboxylique-1,2)-3,3', l'acide carbonylbis (benzène dicarboxylique-1,2)-4,4', l'acide méthyl-1 éthylidène-1,1-bis (benzène dicarboxylique-1,2)-4,4', l'acide trifluorométhyl-1 trifluoro-2,2,2 éthylidène-1,1-bis (benzène dicarboxylique-1,2)-4,4', l'acide phénylène-1,3-bis(carbonylbenzène dicarboxylique-1,2)-4,4', l'acide phénylène-1,4-bis (carbonylbenzène dicarboxylique-1,2)-4,4', l'acide phénylène-1,3-bis (oxybenzène dicarboxylique-1,2)-4,4', l'acide phénylène-1,4-bis (oxybenzène dicarboxylique-1,2)-4,4', l'acide méthyl-1 éthylydène-1,1-bis (phénylène-1,4-oxy)-bis (benzène dicarbo xylique-1,2)-4,4', l'acide pyrazine tétracarboxylique-2,3,5,6, l'acide thiophène tétracarboxylique-2,3,4,5 et le tétracarboxy-3,3',4,4' benzanilide.

Des dianhydrides de formule (II) préférées sont les suivants.

La DNTA : dianhydride 1,4,5,8-naphthalène tétracarboxylique :

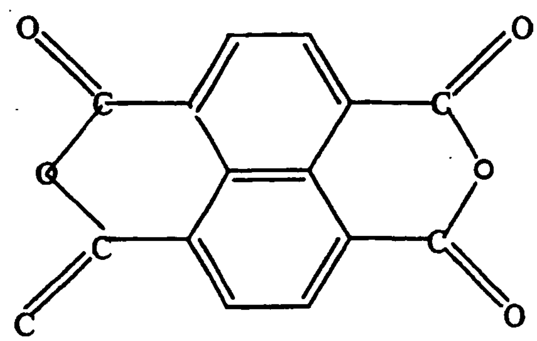

La ODPA : dianhydride oxy-diphtalique :

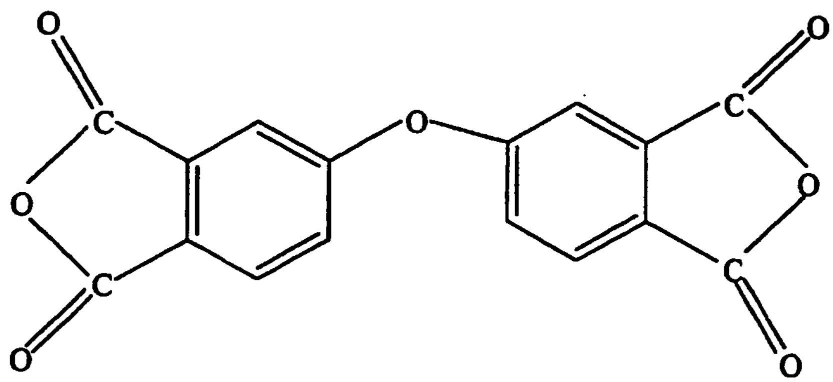

Parmi les diamines sulfonées de formule générale (III), où $Ar_2$ a la signification déjà donnée ci-dessus, on peut citer, à titre d'exemple : l'acide 1,4 diaminobenzène-3 sulfonique, l'acide 4,4'-diamino 1,1'-biphényl-di-2,2'-sulfonique ou toute diamine hydrophobe mentionnée plus loin dont le groupe $Ar_1$ est sulfoné.
Une diamine sulfonée particulièrement préférée est la BDSA.

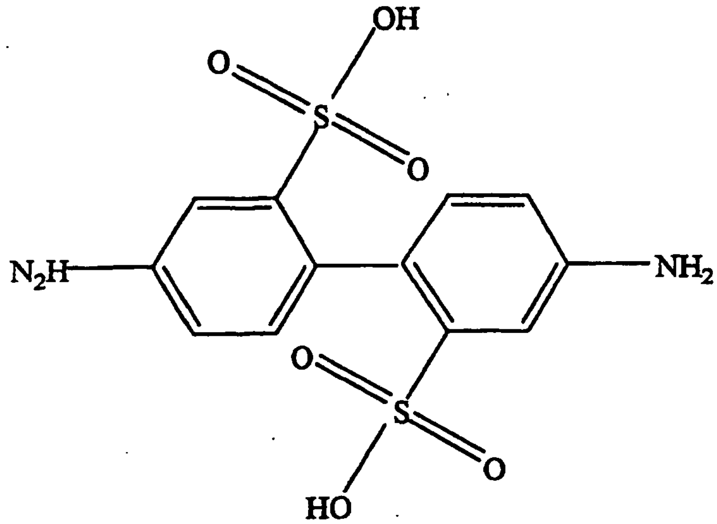

La polymérisation a lieu a une température de 50°C à 200°C, de préférence à 180°C pendant une durée de 2 à 48, de préférence de 14 heures.

Plus précisément, dans cette première étape, on commence par dissoudre la diamine sulfonée dans un solvant approprié.

Le solvant peut être tout solvant adéquat connu de l'homme du métier, comme convenant à la réaction de polycondensation d'un dianhydride et d'une diamine.

Dans un mode de réalisation préféré, le solvant est un solvant aprotique polaire, choisi par exemple parmi le diméthylformamide, le diméthylacétamide, la N-méthylpyrrolidone, seuls ou en mélange avec, par exemple, des solvants aromatiques, tels que le xylène ou des solvants du type éther de glycol.

Le solvant peut aussi être un solvant de type phénolique, c'est-à-dire qu'il est choisi, par exemple, parmi le phénol, les phénols substitués par un ou plusieurs halogènes (Cl, I, Br, F), les crésols (o-, m-, et p-crésol), les crésols substitués par un halogène (Cl, I, Br, F) et les mélanges de ceux-ci.

Des solvants préférés seront constitués par le m-crésol et un mélange de para-chloro-phénol ou de méta-chloro-phénol et de phénol, par exemple, dans les proportions de 20 % de phénol et de 80 % de para ou métachlorophénol.

En outre, il est nécessaire, dans ce qui peut être considéré comme une étape préalable à la synthèse de transformer les fonctions acides sulfoniques de la diamine sulfonée, telle que la BDSA en sel de trialkylammonium, par exemple, en sel de triéthyl ammonium.

En effet, la diamine sulfonée n'est pas soluble dans le solvant de synthèse décrit-dessus et il est donc nécessaire d'ajouter au mélange réactionnel une trialkylamine, par exemple, la triéthylamine, qui va échanger le proton du groupement sulfonique de la diamine sulfonée, par une fonction trialkylammonium et empêcher ainsi la formation d'un polysel insoluble.

Le mélange des réactifs, y compris la trialkylamine, est effectué généralement sous agitation jusqu'à complète dissolution de la diamine sulfonée, et obtention d'une solution homogène et visqueuse. A cette solution, on ajoute alors la dianhydride (par la NTDA), ainsi qu'un catalyseur : ce catalyseur est choisi généralement parmi l'acide benzoïque, etc..

On effectue alors un premier chauffage à une température de 50 à 150°C, par exemple, de 120°C pendant une durée de 2 à 24 heures, par exemple, de 12 heures, généralement sous agitation mécanique. Puis, on réalise la polymérisation, proprement dite, dans les conditions décrites plus haut.

Il est important que l'eau formée par la réaction soit éliminée au fur et à mesure, hors de l'enceinte réactionnelle, par exemple, par distillation.

A l'issue de la réaction, le mélange réactionnel est ramené à la température ambiante. Le composé obtenu à la fin de la première étape répond à la formule suivante :

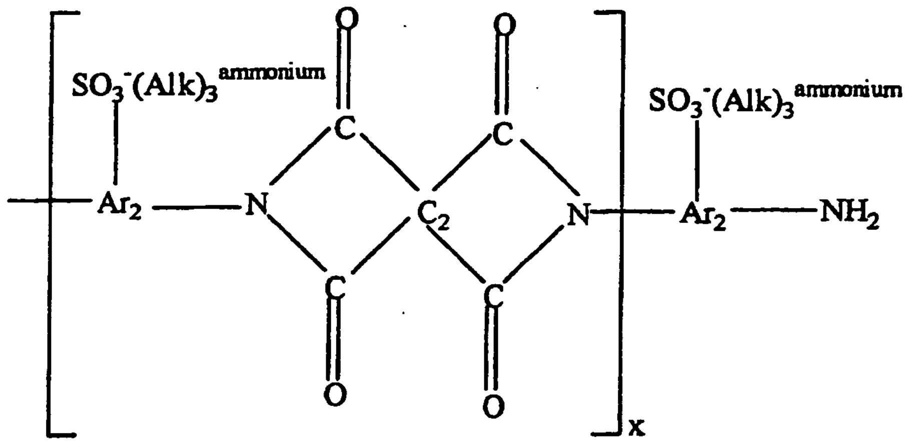

Ainsi, dans le cas de la réaction de BDSA et de NTDA, en présence de triéthylamine, on obtient à la fin de la première étape, le composé suivant :

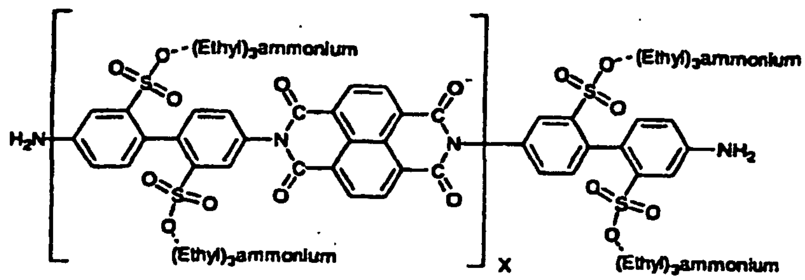

Afin de contrôler la longueur de la séquence ou bloc ionique ou hydrophile, il faut, au cours de cette première étape, ajouter un excès de diamine sulfonée.

Le rapport molaire $R_1$ des quantités de nomomères, lors de cette première étape, est défini par :

$$R_1 = \frac{n\ (\text{dianhydride (II)})}{n\ (\text{diamine sulfonée (III)})}$$

n étant un nombre de moles et $R_1$ étant inférieur à 1.

Selon l'invention, pour que la longueur x du bloc hydrophile (qui correspond à n(diamine sulfonée)), ait la valeur spécifique selon l'invention $R_1$ doit généralement aller de 0,33 à 0,94.

Dans une deuxième étape, on effectue la synthèse du bloc hydrophobe, c'est-à-dire que l'on ajoute au mélange réactionnel obtenu à l'issue de la première étape, un certain nombre de moles de diamine hydrophobes (III'). Le nombre de moles de dimaine hydrophobe introduit est gouverné par le rapport molaire $R_2$ défini par :

$$R_2 = \frac{n\ (\text{diamine sulfonée (III)})}{n\ (\text{diamine hydrophobe (III)})}$$

n(diamine sulfonée (III)) est le nombre de moles de diamine sulfonée (III) introduits lors de la première étape.

Ce rapport définit la capacité d'échanges ioniques (CEI en méq./g) finale du polymère. Afin que la valeur de y soit dans la plage spécifique selon l'invention, le rapport $R_2$ doit généralement être de 0,25 à 4, de préférence de 0,42 à 1.

Pour compléter la stoechiométrie molaire nécessaire à une réaction totale avec la diamine hydrophobe (III') et avec l'oligomère sulfoné (IV) terminé par des fonctions amines, il y a lieu d'ajouter un nombre de moles $n_{stoechio}$ de

dianhydride (II') selon la solution :

$$n_{stoechio}\ (\text{dianhydride (II')}) = n(\text{diamine sulfonée (III)}) + n(\text{diamine hydrophobe (III')}) - n(\text{dianhydride (II)}).$$

Les dianhydrides de formule générale (II') :

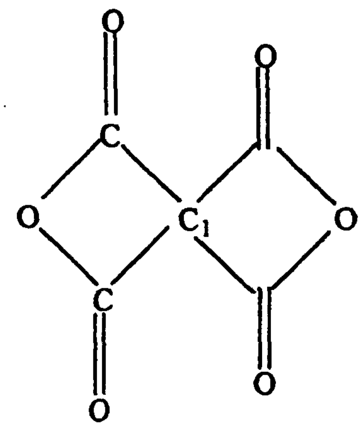

où $C_1$ a la signification déjà donnée ci-dessus, peuvent être choisis parmi les mêmes composés cités plus haut, pour les dianhydrides de formule (II).

De préférence, l'anhydride de formule (II') (ajouté lors de la deuxième étape) est la même que l'anhydride de formule (II).

Parmi les diamines hydrophobes de formule :

$$NH_2 - Ar_1 - NH_2 \qquad (III')$$

où $Ar_1$ a la signification donnée ci-dessus, on peut citer, par exemple : la benzènediamine-1,3, la benzènediamine-1,4, la méthyl-6 benzènediamine-1,3, la méthyl-2 benzènediamine-1,3, la méthyl-5 benzènediamine-1,3, le diamino-4,4' biphényle-1,1', le diamino-4,4' diméthyl-3,3' biphényle-1,1', le diamino-4,4' diméthoxy-3,3' biphényle-1,1', le diamino-4,4' dichloro-3,3' biphényle-1,1', la méthylènebis (benzèneamine)-4,4', la méthylènebis (benzèneamine)-3,3', la méthylènebis (méthyl-3 benzèneamine)-4,4', la méthylènebis (isopropyl-3 benzèneamine)-4,4', l'oxybis (benzèneamine)-4,4', l'oxybis (benzèneamine)-3,3', la carbonylbis (benzèneamine)-4,4', la carbonylis (benzèneamine)-3,3', la thiobis (benzèneamine)-4,4', la thiobis (benzèneamine)-3,3', la sulfonybis (benzèneamine)-4,4', la sulfonylbis (benzèneamine)-3,3', l'hydroxyméthylènebis (benzèneamine)-4,4', l'hydroxyméthylènebis (benzène-amine)-3,3', la difluorométhylènebis(benzèneamine)-4,4', la méthyl-1 éthylidène bis (benzèneamine)-4,4', la trifluorométhyl-1 trifluoro-2,2,2 éthylidène bis (benzèneamine)-4,4', la phénylène-1,3-dioxy bis (benzèneamine)-3,3', la phénylène-1,3-dioxy bis (benzèneamine)-4,4', la phénylène-1,4-dioxy bis (benzèneamine)3,3', la phénylène-1,4-dioxy bis(benzèneamine)-4,4', le diamino-3,3' benzanilide, le diamino-3,4' benzanilide, le diamino-3',4 benzanilide, le diamino-4,4' benzanilide, le bis (amino-3 phényle) diméthylsilane le bis (amino-4-phényle) diméthylsilane et le 9 fluor 9 ylidène bisphénylamine. Il est à noter que l'on peut utiliser un mélange en toutes proportions de plusieurs des amines citées ci-dessus.

Des exemples préférés des diamines hydrophobes préférées sont présentées dans le tableau I suivant avec les nomenclatures utilisées et les caractéristiques communiquées par les diamines au polymère final :

## Tableau I

| Structure de la diamine hydrophobe | Nomenclature utilisée | Caractéristiques |
|---|---|---|
| 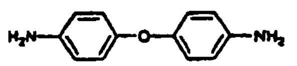 | 4,4' ODA | Enchaînement linéaire (para) avec le dianhydride Un seul pont ether pour la flexibilité |
| 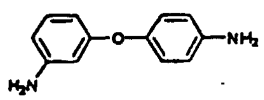 | 3,4' ODA | Enchaînement méta: augmentation de la flexibilité Un seul pont éther |
| Mélange 50% de 4,4'ODA et de 50% de 3,4'ODA | 50% 3,4'ODA | |
| 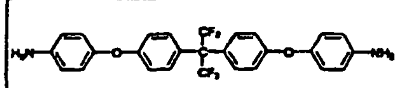 | 4,4' $CF_3$ | Enchaînement linéaire (para) avec le dianhydride Plusieurs ponts: diamine flexible |
| 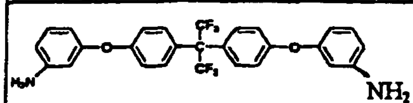 | 3,3' $CF_3$ | Enchaînement méta et plusieurs ponts: importante flexibilité |
| 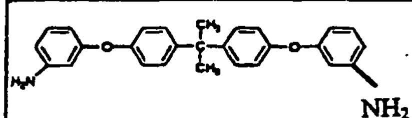 | 3,3' $CH_3$ | Enchaînement méta et plusieurs ponts: importante flexibilité |
| 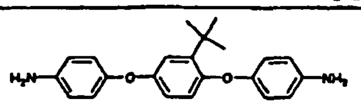 | 4,4' tButyl | Enchaînement linéaire Groupe tertio-butyl créant un encombrement |
| 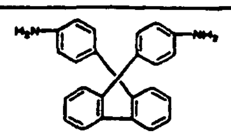 | Cardo | Diamine volumineuse favorisant l'éloignement des chaînes |

Le dianhydride rajouté réagit préférentiellement avec la diamine hydrophobe pour former des blocs ou séquences hydrophobes d'une longueur définie selon l'invention, les séquences ou blocs hydrophobes réagissent ensuite avec les séquences ioniques réalisées lors de la première étape pour donner le polymère final.

Le catalyseur et le solvant utilisés sont généralement les mêmes que lors de la première étape, l'imidation thermique est généralement réalisée à une température de 50 à 200°C, par exemple de 180°C ou 200°C pendant une durée de 2 à 48 heures, par exemple de 20 ou 24 heures.

Plus précisément, on commence par mélanger les réactifs, puis la température de la solution obtenue est portée à de 15 à 300°C, par exemple à 180°C pendant 5 à 180 min., par exemple pendant 90 minutes. On rajoute alors du solvant et on effectue l'imidation thermique, comme décrit plus haut.

En fin de réaction, le mélange réactionnel est refroidi à température ambiante. La solution peut alors être stockée telle quelle ou versée à une température de 80 à 180°C, par exemple, de 160°C, dans un récipient contenant un mauvais solvant du polymère, tel que le méthanol ou l'acétone, pour précipiter le polymère.

Le polymère est ensuite filtré, lavé plusieurs fois, par exemple au méthanol bouillant, afin d'éliminer les traces de solvants résiduels. Il est enfin séché à une température par exemple de 120°C, de préférence sous vide.

La régénération des fonctions sulfoniques sous forme $SO_3H$ se fait en immergeant le polymère pendant une durée de 1 à 24 heures, par exemple pendant 12 heures à température ambiante dans une solution acide, de préférence d'acide chlorhydrique 0,1 N.

Le polymère final a la structure suivante définie par les formules ($I_x$), ($I_y$) et (I) données plus haut.

Pour différencier les polymères étudiés, on peut adopter la nomenclature suivante :

Nomenclature diamine hydrophobe/séquence hydrophile/rapport $R_2$

soit par exemple :

$$\text{pour } R_1 = \frac{n(\text{dianhydride})}{n(\text{diamine sulfonée})} = \frac{4}{5} \text{ et } R_2 = \frac{n(\text{diamine sulfonée})}{n(\text{diamine hydrophobe})} = \frac{30}{70}$$

La nomenclature sera 4,4' ODA 5 30/70, dans le cas où la diamine hydrophobe est la ODA et où la longueur de la séquence hydrophile est de 5 unités de répétition (x = 5 : ce qui est conforme à l'invention).

Si ce même polymère comprenait une diamine hydrophobe comprenant 50 % de 3,4' ODA et 50 % de 4,4' ODA, on aurait alors la nomenclature suivante 50 % 3,4' ODA 5 30/70.

La présente invention a également pour objet un film ou une membrane, comprenant le polyimide sulfoné décrit ci-dessus.

Les films ou membranes peuvent être préparés de manière classique, par exemple, par coulée, c'est-à-dire que le polymère selon l'invention est mis en solution dans un solvant adéquat, tel que du crésol ou du phénol, puis coulé sur une surface plane, telle qu'une plaque de verre, puis séché pour former un film d'une épaisseur, par exemple de 5 à 200 μm.

Les films peuvent être utilisés pour préparer des membranes isolant, en particulier, les compartiment anodiques et cathodiques d'une pile à combustible pouvant fonctionner, par exemple, avec les systèmes suivants :

- hydrogène, alcools, tels que méthanol, à l'anode ;
- oxygène, air, à la cathode.

La présente invention a également pour objet un dispositif de pile à combustible comprenant une ou plusieurs membranes comprenant le polyimide sulfoné selon l'invention.

Du fait de ses excellentes propriétés mécaniques, la membrane peut subir sans détériorations les contraintes (serrage, etc.) liées au montage dans un tel dispositif.

La pile à combustible peut par exemple correspondre au schéma déjà donné sur la figure 1.

L'invention va maintenant être décrite en référence aux exemples suivants, donnés à titre illustratif et non limitatif.

Dans les exemples suivants, on prépare, puis on étudie, dans les mêmes conditions (eau, 80°C) la dégradation par hydrolyse des polyimides sulfonés 50 % 3,4' ODA 30/70 possédant des longueurs de blocs hydrophile et hydrophobe plus ou moins longs ; certains étant conformes à l'invention, d'autres non.

Exemple 1

Dans cet exemple, on décrit la synthèse des polyimides sulfonés qui sont utilisés pour étudier la dégradation par hydrolyse.

1. 1 - Purification des monomères

Pour l'obtention d'un polymère à masse moléculaire élevée, la pureté des monomères et le respect des conditions stoechiométriques sont deux paramètres prépondérants.

a - La diamine sulfonée : acide 2,2'-diamino-4,4'-biphényle disulfonique (BDSA)

La BDSA est un produit commercial vendu sous la forme d'une poudre initialement violette et dont le degré de pureté est de 70 - 80 %.

Dans un ballon de 1 000 ml, 100 g de BDSA sont introduits dans 500 ml d'eau. Le ballon est alors chauffé pendant 4 heures au reflux. Après refroidissement, le solide mauve en suspension est filtré, rincé trois fois à l'eau, puis trois fois au méthanol et séché sous vide à 80°C pendant 12 heures. On obtient un solide blanc légèrement mauve. Le rendement obtenu est proche de 80 %. L'analyse thermogravimétrique révèle la présence de 0,6 % d'eau résiduelle.

b - Le dianhydride : dianhydride de l'acide 1,4,5,8-naphtalène tétracarboxylique (DNTA)

La pureté du dianhydride naphthalénique DNTA est suffisante pour la synthèse du polymère. Ce produit doit toutefois être séché quelques heures à l'étuve à 140°C.

c - La diamine hydrophobe : ODA

L'ODA utilisé est un produit commercial sous forme de poudre dont le degré de pureté initial est de 98 %.

Dans un sublimateur, 200 g d'ODA sont introduits. Le ballon est chauffé à 200°C - 250°C sous vide. L'ODA sublime et se condense sur une paroi froide. On casse le vide et on récupère l'ODA purifié et cristallisé sur la paroi froide.

1. 2 - Synthèse du polyimide naphthalénique 3,4' ODA 5 30/70 (longueur du bloc hydrophobe : 5 unités de répétition)

| Première étape | | | | |
|---|---|---|---|---|
| | BDSA | NTDA | Acide benzoïque | Triéthylamine |
| Formule brute | $C_{12}S_2O_6N_2H_{12}$ | $C_{14}O_6H_4$ | $C_7O_2H_6$ | $C_6NH_{15}$ |
| Masse molaire | 344,36 | 268,18 | 122,12 | 101,19 |
| Masse (g) | 3 | 1 869 | 1,19 | 2,11 |

Lors d'une première étape, dans un ballon tricol de 250 ml, muni d'une agitation mécanique et balayé par un léger courant d'argon (1 bulle/seconde), on introduit 3 g de BDSA (soit 8 $712,10^{-3}$ mol de BDSA contenant 0,6 % d'eau) et 18 g de mélange phénol/3-chlorophénol sous agitation lente. Le phénol est préalablement chauffé dans une étuve, car il n'est pas liquide à température ambiante. Un léger excès de triéthylamine (20 % par rapport aux fonctions sulfoniques) soit 2,11 g est alors introduit. Le mélange phénol/3-chlorophénol et la triéthylamine permettent la mise en solution de la BDSA. La triéthylamine va notamment échanger le proton $H^+$ du groupement sulfonique de la BDSA par la fonction triéthylamonium $(C_2H_5)_3N^+$-H, empêchant ainsi la formation d'un polysel insoluble. La solution devient alors homogène et visqueuse. 1 869 g de NTDA (soit 6 $969,10^{-3}$ ml) sont alors ajouté, ainsi que 1,19 g d'acide benzoïque (catalyseur). Après un palier de 2 heures à 120°C sous agitation mécanique, la température est portée à 180°C pendant 21 heures. L'eau générée par la réaction est éliminée au fur et à mesure par distillation hors du ballon. Au cours de la réaction, une augmentation de la viscosité est observée. L'agitation est alors coupée et on laisse le mélange réactionnel revenir à température ambiante.

| Deuxième étape | | | |
|---|---|---|---|
| | ODA | NTDA | Acide benzoïque |
| Formule brute | $C_{12}ON_2H_{12}$ | $C_{14}O_6H_4$ | $C_7O_2H_6$ |
| Masse molaire | 200,24 | 268,18 | 122,12 |
| Masse (g) | 4,07 | 5,919 | 3,77 |

Dans une seconde étape, 4,07 g de 3,4' ODA (soit 20 $328,10^{-3}$ mol), 5 919 g de NTDA (soit 22 $071,10^{-3}$ mol) et 3,77 g d'acide benzoïque sont ajoutés dans 41 g de chlorophénol pour obtenir une solution de 20 % en masse. La température est portée à 180°C pendant 90 minutes. Au bout d'une heure, le milieu est très visqueux et 50 g de chlorophénol sont ajoutés (solution finale aux alentours de 12 % en masse). La température est alors portée à 200°C pendant 24 heures.

En fin de réaction, le mélange réactionnel est refroidi à température ambiante et la solution obtenue est tellement visqueuse qu'elle fige et ne coule plus. La solution peut alors être stockée telle quelle dans un flacon ou versée à 160°C dans un récipient contenant du méthanol (mauvais solvant) pour précipiter le polymère. Le polymère est ensuite filtré, lavé plusieurs fois au méthanol bouillant, afin d'éliminer les traces de solvants résiduels. Il est enfin séché à 120°C sous vide pendant une nuit.

La régénération des fonctions sulfoniques sous forme $SO_3H$ se fait en immergeant le polymère 12 heures à température ambiante dans une solution d'acide chlorhydrique 0,1 N.

1. 3 - Synthèse du polyimide naphtalénique 3,4' ODA 1 30/70 (statistique ; longueur du bloc hydrophile : 1 unité de répétition)

On répète la synthèse décrite en 1.2, sauf que les proportions de réactifs sont adaptés en conséquence.

1. 4 - Synthèse du polyimide naphtalénique 3,4' ODA 3 30/70 (longueur du bloc hydrophile : 3 unités de répétition)

On répète la synthèse décrite en 1.2, sauf que les proportions des réactifs sont adaptés en conséquence.

1. 5 - Synthèse du polyimide naphtalénique 3,4' ODA 9 30/70 (longueur du bloc hydrophile : 9 unités répétition)

On répète la synthèse décrite en 1.2, sauf que les proportions des réactifs sont adaptés en conséquence.
On prépare des membranes à partir de chacun des polymères synthétisés ci-dessus; de manière connue.
Comme la dégradation semble débuter, dès les premières heures d'immersion dans l'eau à 80°C, on suit l'évolution de la conductivité, du gonflement et de la perte de masse au cours de cette période.
Chaque fois, plusieurs échantillons de chaque membrane sont étudiés. On étudie également la tenue mécanique en fonction du temps pour les différents membranes.
La figure 2 donne l'évolution de la conductivité avec le temps d'immersion dans de l'eau à 80°C pour les divers polymères étudiés ayant des longueurs de bloc hydrophile différentes.
Le tableau II montre l'évolution du complément (G(%)) et de la perte de masse (M(%)) lors du vieillissement des membranes (B 35) avec une séquence hydrophile à 1 unité de répétition (B 30) (3/2) avec une séquence hydrophile à 3 unités de répétition et (B 29) (9/8) avec une séquence hydrophile à 9 unités de répétition.

Tableau II

| Evolution du gonflement (G (%)) et de la perte de masse (M (%)), lors du vieillissement de membranes 50 % 3,4' ODA 30/70, ayant différentes longueurs de blocs | | | | |
|---|---|---|---|---|
| | G (%) initial | t=23 heures | t=56 heures | t=79 heures |
| Statistique | 35 | G=43 %, M=3 % | | |
| | 36,9 | G=42,3 %, M=2,4 % | | |
| 3/2 | 39,2 | | G=47,9 %, M=2,7% | G=40,3%, M=7% |
| | 36 | | G=45,2 %, M=2,7 % | G=37,2%, M=5,3% |
| 9/8 | 66,2 | | G=109,6%, M=0,9% | G=97,2%, M=3% |
| | 64,2 | | G=110%, M=2,2% | G=97%, M=3,3% |

Pour tous les échantillons étudiés, on observe une augmentation de la conductivité et du gonflement en eau, lors des premières heures du vieillissement. Lorsque la perte de masse augmente, la conductivité et le gonflement commencent à diminuer. Ces observations vont dans le sens d'une dégradation par hydrolyse (formation de diacide (augmentation du gonflement et de la conductivité)), suivie d'une élimination.
En terme de tenue mécanique en fonction du temps, les membranes statiques sont très fragiles et montrent des fissurations multiples, après seulement 23 heures, les membranes 3/2, après 100 heures, les membranes 5/4 (conformes à l'invention), après 1 000 heures et les membranes 9/8 (conformes à l'invention), au bout d'un temps supérieur à 2 500 heures.
Il a été ainsi démontré que des polyimides sulfonés formés de longs blocs (avec x ≥ 5, selon l'invention) ont une meilleure stabilité mécanique dans le temps, en terme de non fissuration.

Exemple 3

Dans cet exemple, on s'intéresse, plus particulièrement, à l'évolution, au cours du vieillissement, des propriétés du polymère présentant des blocs hydrophiles à 9 unités de répétition (conforme à l'invention).

3. 1 - Evolution des propriétés mécaniques au cours du vieillissement

Les propriétés mécaniques, à savoir : dureté H (en GPa), en fonction de la profondeur d'indentation (nm) ; module d'élasticité E (en GPa), en fonction de la profondeur d'indentation (nm) ; et la profondeur indentée (nm), en

fonction de la face de pénétration appliquée (mN) ont été mesurées initialement et après 2 400 heures de vieillissement, dans l'eau à 80°C.

Les mesures sont très irrégulières par ce que cette membrane a une structure particulièrement poreuse. Toutefois, il ne semble pas qu'il y ait eu une réelle modification des propriétés mécaniques, confirmant l'excellente résistance à l'hydrolyse de cette membrane, conforme à l'invention.

3. 2 - Evolution de la conductivité

La conductivité est parfaitement stabilisée après 100 heures de vieillissement jusqu'à environ 500 heures. Après, la conductivité chute à nouveau régulièrement. On notera l'apparition d'un demi-cercle sur les diagrammes d'impédance au court du vieillissement (figures 4A et 4B).

le diagramme d'impédance de la membrane avant dégradation est représenté sur la figure 3.

On constate, sur les figures 4A et 4B, que les demi-cercles obtenus pour les diagrammes d'impédance (NYQUIST), en fonction du temps de vieillissement, sont légèrement décentrés. Leur rayon augmente en fonction de la durée de vieillissement.

3. 3 - Perte de masse

La perte de masse est d'environ 12 % (fig. 5), après 2 000 heures d'immersion dans l'eau à 80°C, pour le polymère à longues séquences (9 hydrophiles). On rappelle que, dans les mêmes conditions, la perte de masse d'un polyimide à séquence hydrophile 5 est d'environ 30 %.

## Revendications

**1.** Polyimide sulfoné séquencé formé par les blocs ou séquences représentés par les formules ($I_x$) et ($I_y$) suivantes :

(Ix) (Iy)

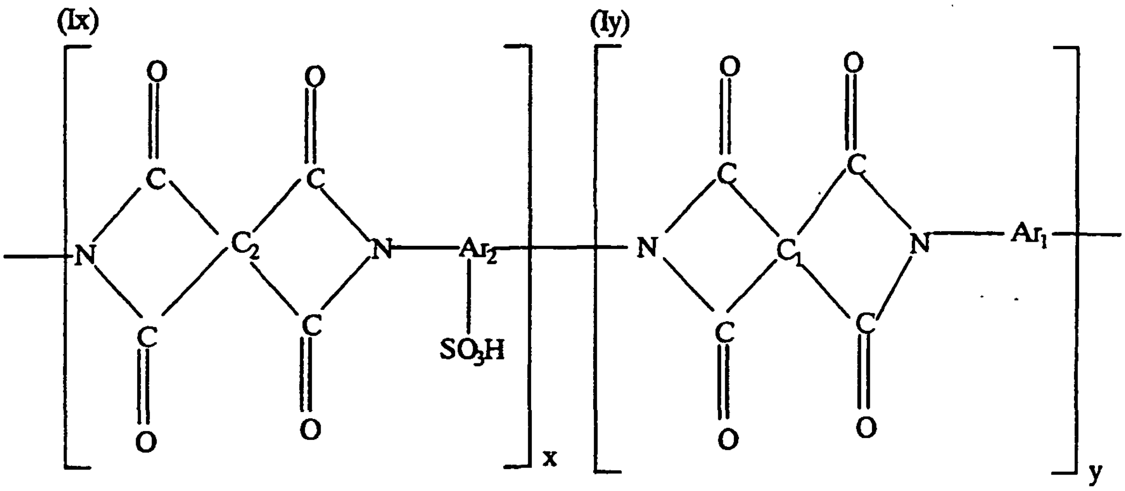

dans lesquelles :

- x est un nombre réel de 5 à 10 ; et
- y est un nombre réel supérieur ou égal à x ;
- et les groupes $C_1$ et $C_2$ peuvent être identiques ou différents et représentent chacun un groupe tétravalent comprenant au moins un cycle aromatique carboné, éventuellement substitué, ayant de 6 à 10 atomes de carbone et/ou un hétérocycle à caractère aromatique, éventuellement substitué, ayant de 5 à 10 atomes et comprenant un ou plusieurs hétéroatomes choisis parmi S, N et 0 ; $C_1$ et $C_2$ formant chacun, avec les groupes imides voisins, des cycles à 5 ou 6 atomes,
- les groupes $Ar_1$ et $Ar_2$ peuvent être identiques ou différents et représentent chacun un groupe divalent comprenant au moins un cycle aromatique carboné, éventuellement substitué, ayant de 6 à 10 atomes de carbone et/ou un hétérocycle à caractère aromatique, éventuellement substitué, ayant de 5 à 10 atomes et comprenant

un ou plusieurs hétéroatomes choisi parmi S, N et O ; au moins un desdits cycles aromatiques carbonés et/ou hétérocycle de $Ar_2$ étant, en outre, substitué par au moins un groupe acide sulfonique.

**2.** Polyimide sulfoné selon la revendication 1, dans lequel la valeur de y est de 5 à 40.

**3.** Polyimide sulfoné selon l'une quelconque des revendications 1 et 2, dans lequel la valeur de x est de 5 à 9 et la valeur de y est de 5 à 10.

**4.** Polyimide sulfoné selon l'une quelconque des revendications 1 à 3, répondant à la formule générale suivante (I) :

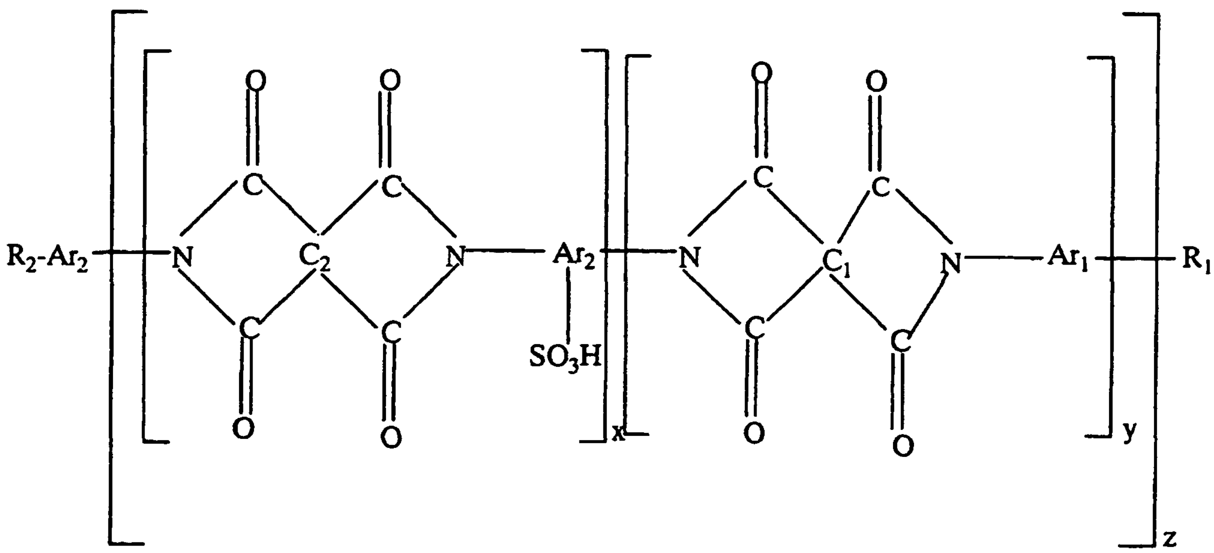

dans laquelle $C_1$, $C_2$, $Ar_1$ et $Ar_2$, x et y ont la signification déjà donnée ci-dessus et où chacun des groupes $R_1$ et $R_2$ représente $NH_2$, ou un groupe de formule :

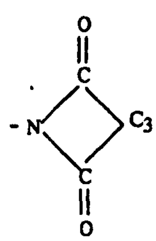

où $C_3$ est un groupe divalent comprenant au moins un cycle aromatique carboné, éventuellement substitué, ayant de 6 à 10 atomes de carbone et/ou un hétérocycle à caractère aromatique, éventuellement substitué, ayant de 5 à 10 atomes et comprenant un ou plusieurs hétéroatomes choisis parmi S, N et O, $C_3$ formant avec le groupe imide voisin un cycle à 5 ou 6 atomes.

**5.** Polyimide sulfoné selon la revendication 4, dans lequel dans la formule (I), z représente un nombre de 1 à 10.

**6.** Polyimide sulfoné selon l'une quelconque des revendications 1 à 5 dont le poids moléculaire équivalent défini par le poids de polymère en gramme par équivalent acide sulfonique est de 400 à 2 500.

**7.** Polyimide sulfoné selon l'une quelconque des revendications 1 à 6 dont le poids moléculaire est de 10 000 à 100 000.

**8.** Polyimide sulfoné selon la revendication 1 ou la revendication 4, dans lequel dans les formules ($I_x$), ($I_y$) et (I), $C_1$

et $C_2$ peuvent être identiques ou différents et représentent chacun, un cycle benzénique éventuellement substitué, par un ou deux substituant(s) choisi(s) parmi les groupes alkyles et alcoxy de 1 à 10 C et les atomes d'halogène ; ou plusieurs cycles benzéniques éventuellement substitués par un ou plusieurs substituant(s) choisi(s) parmi les groupes alkyles et alcoxy de 1 à 10 C et les atomes d'halogène, reliés entre eux par une simple liaison ou par un groupe divalent.

- $C_1$ et $C_2$ peuvent également chacun représenter un groupe carboné polycyclique condensé éventuellement substitué par un ou plusieurs substituant(s) choisi(s) parmi les groupes alkyles et alcoxy de 1 à 10 C et les atomes d'halogène,
- $C_1$ et $C_2$ peuvent aussi représenter un hétérocycle ou un hétérocycle condensé, à caractère aromatique, cet hétérocycle étant éventuellement substitué par un ou plusieurs substituants choisis parmi les groupes alkyles et alcoxy de 1 à 10 C, et les atomes d'halogènes.
- $Ar_1$ et $Ar_2$ peuvent être identiques ou différents et représentent chacun par exemple un cycle benzénique divalent à attachement meta, ou para ; éventuellement substitué par un ou plusieurs substituants choisis parmi les groupes alkyles et alcoxy de 1 à 10 C et les atomes d'halogène ; ou plusieurs cycles benzéniques éventuellement substitués par un ou plusieurs substituants choisis parmi les groupes alkyles et alcoxy de 1 à 10 C et les atomes d'halogène , reliés entre eux par une simple liaison ou par un groupe divalent.
- $Ar_1$ et $Ar_2$ peuvent également chacun représenter un groupe carboné polycyclique condensé éventuellement substitué par un ou plusieurs substituant(s) choisi(s) parmi les groupes alkyles et alcoxy de 1 à 10 C et les atomes d'halogène,
- $Ar_1$ et $Ar_2$ peuvent aussi représenter un hétérocycle ou un hétérocycle condensé, à caractère aromatique, cet hétérocycle étant éventuellement substitué par un ou plusieurs substituant(s) choisi(s) parmi les groupes alkyles et alcoxy de 1 à 10 C, et les atomes d'halogènes.

**9.** Polyimide sulfoné selon la revendication 4, dans lequel dans la formule (I) $C_3$ est un cycle benzénique ou naphtalénique éventuellement substitué par un ou plusieurs substituant(s) choisi(s) parmi les groupes alkyles et alcoxy de 1 à 10 C et les atomes d'halogène.

**10.** Polyimide sulfoné selon la revendication 8, dans lequel ledit groupe divalent est choisi parmi :

- un groupe divalent dérivé d'un groupe alkyle linéaire ou ramifié de 1 à 10 C éventuellement substitué, par un ou plusieurs halogènes choisis parmi F, Cl, Br et I et/ou par un ou plusieurs groupes hydroxyle(s) :
- un hétéroatome choisi parmi O, S ;
- un groupe

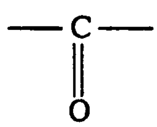

;

un groupe

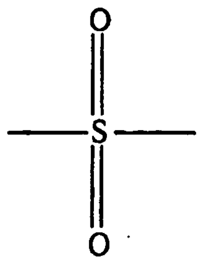

;

un groupe

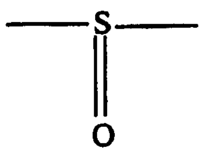

;

un groupe

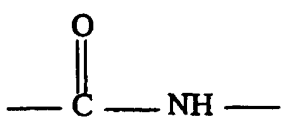

;

un groupe

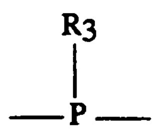

;

un groupe

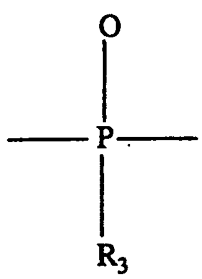

;

un groupe

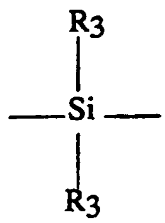

;

un groupe

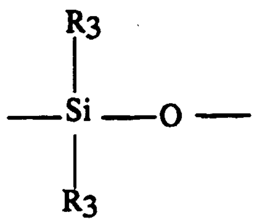

;

un groupe

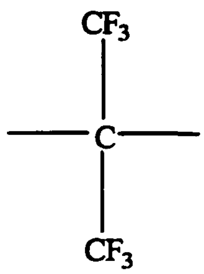

;

un groupe

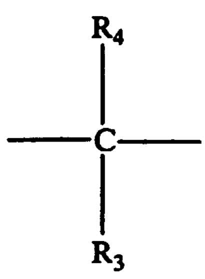

;

où $R_3$ et $R_4$ sont choisis parmi les groupes alkyle de 1 à 10 C tels que méthyle, éthyle, isopropyle, etc.

**11.** Polyimide sulfoné selon la revendication 8, dans lequel $C_1$ est un cycle benzénique et $C_2$ est un ensemble de deux cycles benzéniques reliés entre eux par un pont oxygène.

**12.** Polyimide sulfoné selon la revendication 8, dans lequel $C_1$ est constitué par des cycles benzéniques reliés par un ou des groupe(s) perfluoroalkylène(s) et $C_2$ est constitué par des cycles benzéniques reliés par un ou des groupe (s) perfluoroalkyle(s) divalents ou perfluoroalkylène(s).

**13.** Polyimide sulfoné selon la revendication 8, dans lequel $C_1$ est un cycle benzénique et $C_2$ est un cycle naphtalénique.

**14.** Polyimide sulfoné selon la revendication 8, dans lequel $C_1$ et $C_2$ sont tous deux des cycles naphtaléniques.

**15.** Polyimide sulfoné selon la revendication 8, dans lequel $Ar_1$ est un groupe diphénylméthane et $Ar_2$ est un groupe biphényl-disulfonique.

**16.** Polyimide sulfoné selon la revendication 8, dans lequel $Ar_1$ est un groupe benzénique et $Ar_2$ un groupe biphényl-disulfonique.

**17.** Procédé selon la revendication 8, dans lequel $Ar_1$ est un groupe diphényléther et $Ar_2$ est un groupe biphényl-disulfonique.

**18.** Membrane comprenant un polyimide sulfoné selon l'une quelconque des revendications 1 à 17.

**19.** Dispositif de pile à combustible comprenant au moins une membrane selon la revendication 18.

**Patentansprüche**

**1.** Sulfoniertes Block-Copolyimid, bestehend aus Blöcken oder Sequenzen der nachstehend angegebenen Formeln ($I_x$) und ($I_y$):

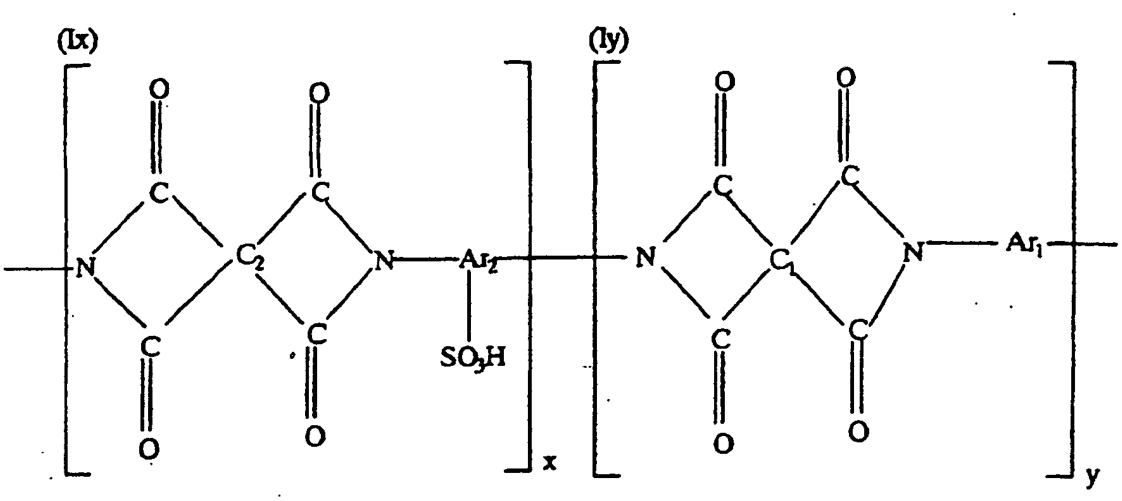

worin bedeuten:

- x eine reelle Zahl von 5 bis 10; und
- y eine reelle Zahl, die größer als oder gleich der Zahl x ist;
- worin die Gruppen $C_1$ und $C_2$ gleich oder verschieden sein können und jeweils darstellen eine tetravalente Gruppe, die umfasst mindestens einen aromatischen Kohlenstoffring, der gegebenenfalls substituiert ist, mit 6 bis 10 Kohlenstoffatomen und/oder einen Heteroring mit aromatischem Charakter, der gegebenenfalls substituiert ist, mit 5 bis 10 Kohlenstoffatomen und der ein oder mehrere Heteroatome, ausgewählt aus der Gruppe S, N und O, enthält; wobei $C_1$ und $C_2$ jeweils zusammen mit den benachbarten Imidgruppen Ringe mit 5 oder 6 Atomen bilden;
- worin die Gruppen $Ar_1$ und $Ar_2$, die gleich oder verschieden sein können, jeweils darstellen eine divalente Gruppe, die umfasst mindestens einen aromatischen Kohlenstoffring, der gegebenenfalls substituiert ist, mit

6 bis 10 Kohlenstoffatomen und/oder einen Heteroring mit aromatischem Charakter, der gegebenenfalls substituiert ist, mit 5 bis 10 Atomen und der ein oder mehrere Heteroatome, ausgewählt aus der Gruppe S, N und O, enthält;

wobei mindestens einer der genannten aromatischen Kohlenstoffringe und/oder Heteroring von $Ar_2$ außerdem durch mindestens eine Sulfonsäuregruppe substituiert ist.

2. Sulfoniertes Polyimid nach Anspruch 1, in dem der Wert von y 5 bis 40 beträgt.

3. Sulfoniertes Polyimid nach einem der Ansprüche 1 und 2, in dem der Wert von x 5 bis 9 beträgt und der Wert von y 5 bis 10 beträgt.

4. Sulfoniertes Polyimid nach einem der Ansprüche 1 bis 3, das der folgenden allgemeinen Formel (I) entspricht:

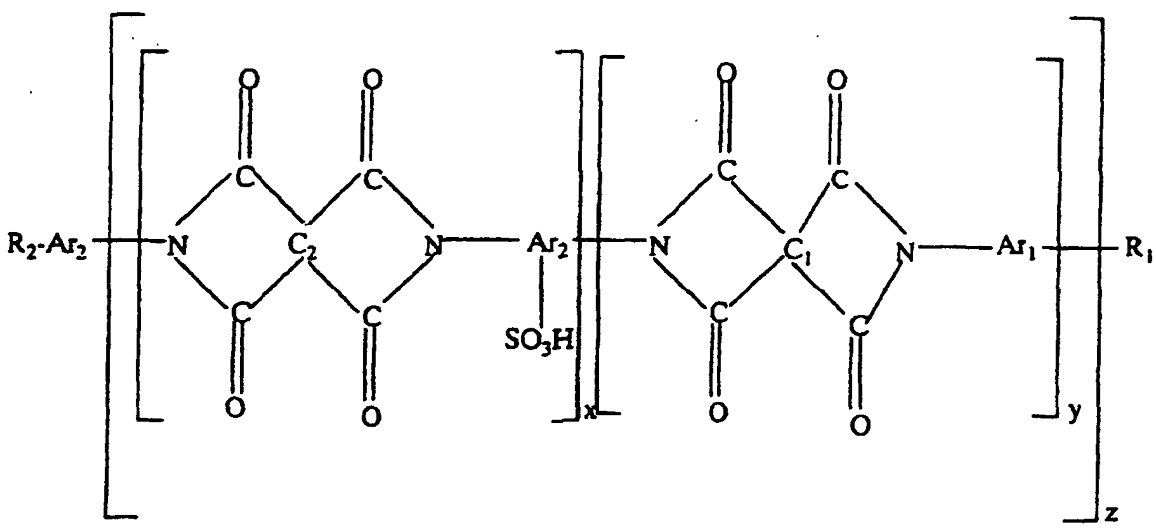

worin $C_1$, $C_2$, $Ar_1$ und $Ar_2$, x und y die bereits oben angegebene Bedeutung haben und jede der Gruppen $R_1$ und $R_2$ für $NH_2$ oder eine Gruppe der Formel steht:

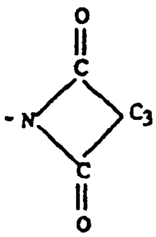

worin $C_3$ steht für eine divalente Gruppe, die aufweist mindestens einen aromatischen Kohlenstoffring, der gegebenenfalls substituiert ist, mit 6 bis 10 Kohlenstoffatomen und/oder einen Heteroring mit aromatischem Charakter, der gegebenenfalls substituiert ist, mit 5 bis 10 Atomen und der ein oder mehrere Heteroatome, ausgewählt aus der Gruppe S, N und O, enthält, wobei $C_3$ zusammen mit der benachbarten Imidgruppe einen Ring mit 5 oder 6 Atomen bildet.

5. Sulfoniertes Polyimid nach Anspruch 4, in dem in der Formel (I) z eine Zahl von 1 bis 10 darstellt.

6. Sulfoniertes Polyimid nach einem der Ansprüche 1 bis 5, in dem das Äquivalent-Molekulargewicht, definiert durch das Gewicht des Polymers in Gramm pro Äquivalent Sulfonsäure, 400 bis 2 500 beträgt.

7. Sulfoniertes Polyimid nach einem der Ansprüche 1 bis 6, in dem das Molekulargewicht 10 000 bis 100 000 beträgt.

8. Sulfoniertes Polyimid nach Anspruch 1 oder nach Anspruch 4, in dem in den Formeln ($I_x$), ($I_y$) und (I) $C_1$ und $C_2$ gleich oder verschieden sein können und jeweils stehen für einen Benzolring, der gegebenenfalls substituiert ist durch einen oder zwei Substituenten, ausgewählt aus den Alkyl- und Alkoxygruppen mit 1 bis 10 Kohlenstoffatomen und den Halogenatomen; oder mehrere Benzolringe, die gegebenenfalls substituiert sind durch einen oder mehrere Substituenten, ausgewählt aus den Alkyl- und Alkoxygruppen mit 1 bis 10 Kohlenstoffatomen und den Halogenatomen, die durch eine einfache Bindung oder durch eine divalente Gruppe miteinander verbunden sind;

- $C_1$ und $C_2$ jeweils auch eine kondensierte polycyclische Kohlenstoffgruppe darstellen können, die gegebenenfalls substituiert ist durch einen oder mehrere Substituenten, ausgewählt aus den Alkyl- und Alkoxygruppen mit 1 bis 10 Kohlenstoffatomen und den Halogenatomen,
- $C_1$ und $C_2$ auch einen Heterocyclus oder einen kondensierten Heterocyclus mit aromatischem Charakter darstellen können, wobei dieser Heterocyclus gegebenenfalls substituiert ist durch einen oder mehrere Substituenten, ausgewählt aus den Alkyl- und Alkoxygruppen mit 1 bis 10 Kohlenstoffatomen und den Halogenatomen;
- $Ar_1$ und $Ar_2$ gleich oder verschieden sein können und jeweils stehen beispielsweise für einen divalenten Benzolring, der in m- oder p-Stellung gebunden ist, der gegebenenfalls substituiert ist durch einen oder mehrere Substituenten, ausgewählt aus den Alkyl- und Alkoxygruppen mit 1 bis 10 Kohlenstoffatomen und den Halogenatomen; oder für mehrere Benzolringe, die gegebenenfalls substituiert sind durch einen oder mehrere Substituenten, ausgewählt aus den Alkyl- und Alkoxygruppen mit 1 bis 10 Kohlenstoffatomen und den Halogenatomen, die durch eine einfache Bindung oder durch eine divalente Gruppe miteinander verbunden sind;
- $Ar_1$ und $Ar_2$ auch stehen können für eine kondensierte polycyclische Kohlenstoffgruppe, die gegebenenfalls substituiert ist durch einen oder mehrere Substituenten, ausgewählt aus den Alkyl- und Alkoxygruppen mit 1 bis 10 Kohlenstoffatomen und den Halogenatomen;
- $Ar_1$ und $Ar_2$ auch einen Heteroring oder einen kondensierten Heteroring mit aromatischem Charakter darstellen können, wobei dieser Heteroring gegebenenfalls substituiert ist durch einen oder mehrere Substituenten, ausgewählt aus den Alkyl- und Alkoxygruppen mit 1 bis 10 Kohlenstoffatomen und den Halogenatomen.

9. Sulfoniertes Polyimid nach Anspruch 4, in dem in der Formel (I) $C_3$ einen Benzol- oder Naphthalinring darstellt, der gegebenenfalls substituiert ist durch einen oder mehrere Substituenten, ausgewählt aus den Alkyl- und Alkoxygruppen mit 1 bis 10 Kohlenstoffatomen und den Halogenatomen.

10. Sulfoniertes Polyimid nach Anspruch 8, in dem die divalente Gruppe ausgewählt ist aus:

- einer divalenten Gruppe, die von einer linearen oder verzweigten Alkylgruppe mit 1 bis 10 Kohlenstoffatomen abgeleitet ist, die gegebenenfalls substituiert ist durch ein oder mehrere Halogenatome, ausgewählt aus F, Cl, Br und J, und/oder durch eine oder mehrere Hydroxylgruppen;
- einem Heteroatom, ausgewählt aus O, S;
- einer

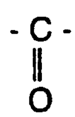 -Gruppe;

einer

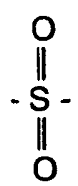 -Gruppe;

einer

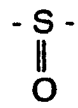 -Gruppe;

einer

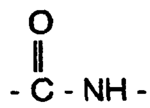 -Gruppe;

einer

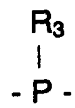 -Gruppe;

einer

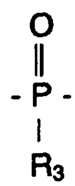 -Gruppe;

einer

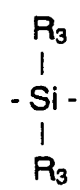 -Gruppe;

einer

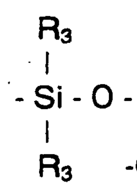 -Gruppe;

einer

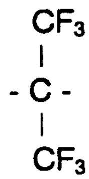 -Gruppe;

einer

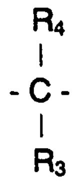 -Gruppe;

worin $R_3$ und $R_4$ ausgewählt sind aus den Alkylgruppen mit 1 bis 10 Kohlenstoffatomen, wie z.B. Methyl, Ethyl, Isopropyl und dgl.

**11.** Sulfoniertes Polyimid nach Anspruch 8, in dem $C_1$ für einen Benzolring steht und $C_2$ für eine Einheit aus zwei Benzolringen steht, die durch eine Sauerstoffbrücke miteinander verbunden sind.

**12.** Sulfoniertes Polyimid nach Anspruch 8, in dem $C_1$ aus Benzolringen aufgebaut ist, die durch eine oder mehrere Perfluoralkylengruppen miteinander verbunden sind, und $C_2$ aufgebaut ist aus Benzolringen, die durch eine oder mehrere divalente Perfluoralkylgruppen oder Perfluoralkylengruppen miteinander verbunden sind.

**13.** Sulfoniertes Polyimid nach Anspruch 8, in dem $C_1$ für einen Benzolring steht und $C_2$ für einen Naphthalinring steht.

**14.** Sulfoniertes Polyimid nach Anspruch 8, in dem $C_1$ und $C_2$ beide für Naphthalinringe stehen.

**15.** Sulfoniertes Polyimid nach Anspruch 8, in dem $Ar_1$ für eine Diphenylmethangruppe und $Ar_2$ für eine Biphenyldisulfongruppe stehen.

**16.** Sulfoniertes Polyimid nach Anspruch 8, in dem $Ar_1$ für eine Benzolgruppe und $Ar_2$ für eine Biphenyldisulfongruppe stehen.

**17.** Sulfoniertes Polyimid nach Anspruch 8, in dem $Ar_1$ für eine Diphenylethergruppe und $Ar_2$ für eine Biphenyldisulfongruppe stehen.

**18.** Membran, die ein sulfoniertes Polyimid nach einem der Ansprüche 1 bis 17 umfasst.

**19.** Brennstoffzellen-Vorrichtung, die mindestens eine Membran nach Anspruch 18 umfasst.

**Claims**

**1.** Sequenced sulfonated polyimide formed by the blocs or sequences represented by the formulas ($I_x$) and ($I_y$) as follows:

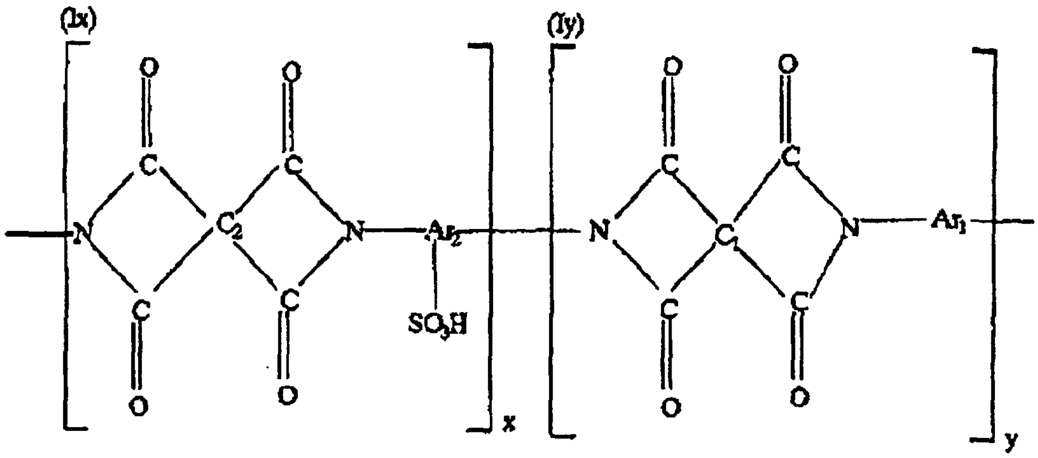

in which:

- x is a real number from 5 to 10; and
- y is a real number greater than or equal to x;
- and the groups $C_1$ and $C_2$ can be identical or different, and each represents a tetravalent group comprising at least one carbonaceous aromatic ring, optionally substituted, having from 6 to 10 carbon atoms and/or a heterocycle of aromatic character, optionally substituted, having from 5 to 10 atoms and comprising one or more heteroatoms selected from the group including S, N and O; $C_1$ and $C_2$ each forming, with the adjacent imide groups, cycles of 5 or 6 atoms,
- the groups $Ar_1$ and $Ar_2$ can be identical or different, and each represents a divalent group comprising at least one carbonaceous aromatic ring, optionally substituted, having from 6 to 10 carbon atoms and/or a heterocycle that is aromatic in character, optionally substituted, having from 5 to 10 atoms and comprising one or several heteroatoms selected from the group including S, N and O; at least one of the above mentioned carbonaceous aromatic rings and/or $Ar_2$ heterocycle being, moreover, substituted by at least one sulfonic acid group.

**2.** Sulfonated polyimide as mentioned in claim 1, in which the value of y is in the range from 5 to 40.

**3.** Sulfonated polyimide as mentioned in either one of Claims 1 and 2 in which the value of x is from 5 to 9 and the value of y is from 5 to 10.

**4.** Sulfonated polyimide as mentioned in any one of Claims 1 through 3 represented by the following general formula (I):

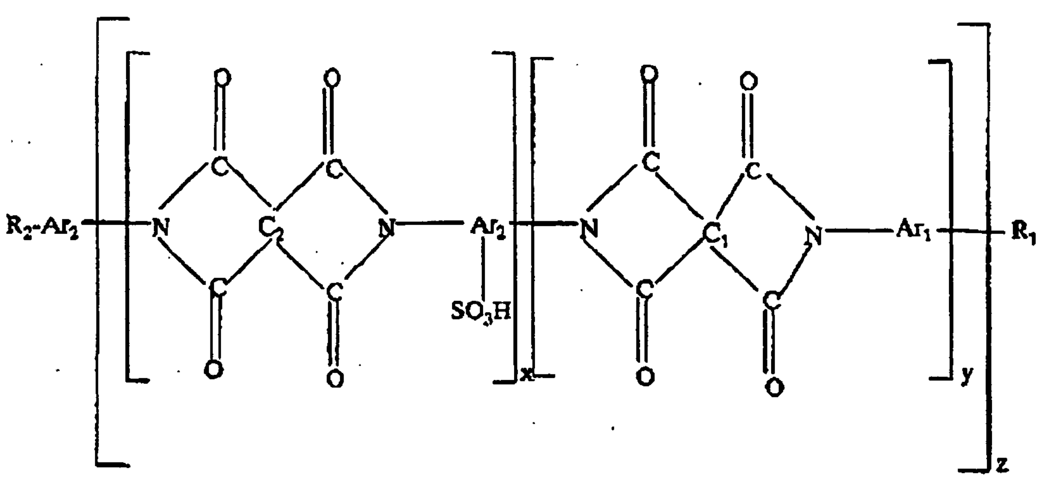

in which $C_1$, $C_2$, $Ar_1$ and $Ar_2$, x and y have the meaning given above and where each of the groups $R_1$ and $R_2$ represents $NH_2$ or a group represented by the formula:

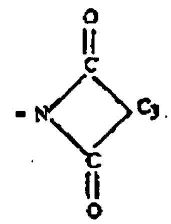

where $C_3$ is a divalent group comprising at least one carbonaceous aromatic ring, optionally substituted, having from 6 to 10 carbon atoms and/or a heterocycle of aromatic character, optionally substituted, having from 5 to 10 atoms and comprising one or more

heteroatoms selected from the group that includes S, N, and O, $C_3$ forming with the adjacent imide group a cycle with 5 or 6 atoms.

**5.** Sulfonated polyimide as mentioned in Claim 4, in which in the formula (I), z represents a number from 1 to 10.

**6.** Sulfonated polyimide as mentioned in any one of Claims 1 through 5, the equivalent molecular weight defined by the polymer weight in gram per sulfonic acid equivalent of which is from 400 to 2,500.

**7.** Sulfonated polyimide as mentioned in any one of Claims 1 through 6 the molecular weight of which is from 10,000 to 100,000.

**8.** Sulfonated polyimide as mentioned in Claim 1 or Claim 4, in which in the formulas ($I_x$), ($I_y$), and (I), $C_1$ and $C_2$ can be identical or different, and each represents a benzenic ring optionally substituted, by one or two substitutes selected from the alkyl and alcoxy groups with 1 to 10 C and the halogen atoms; or several benzenic rings optionally substituted by one or more substitutes selected from the alkyl and alcoxy groups with 1 to 10 C and the halogen atoms, linked by a simple bond or by a divalent group between them.

- $C_1$ and $C_2$ can also each represent a condensated polycyclic carbonaceous group optionally substituted by one or more substitutes selected from the alkyl and alcoxy groups with 1 to 10 C and the halogen atoms,
- $C_1$ and $C_2$ can also each represent a heterocycle or a condensated heterocycle, with aromatic character, this heterocycle being optionally substituted by one or more substitutes selected from among the alkyl and alcoxy groups with 1 to 10 C and the halogen atoms.
- $Ar_1$ and $Ar_2$ can be identical or different, and each represents, for example, a divalent benzenic ring with meta or para binding, optionally substituted by one or more substitutes selected from among the alkyl and alcoxy with 1 to 10 C and the halogen or several benzenic rings optionally substituted by one or more substitutes selected from among the alkyl and alcoxy groups with 1 to 10 C and the halogen atoms, linked by a simple bond or by a divalent group.
- $Ar_1$ and $Ar_2$ can also each represent a condensated polycyclic carbonaceous group optionally substituted by one or more substitutes selected from among the alkyl and alcoxy groups with 1 to 10 C and the halogen atoms.
- $Ar_1$ and $Ar_2$ can also each represent a condensated polycyclic carbonaceous group optionally substituted by one or more substitutes selected from among the alkyl and alcoxy groups with 1 to 10 C and the halogen atoms,

**9.** Sulfonated polyimide as mentioned in Claim 4, in which in the formula (I), $C_3$ is a benzenic or naphtalenic cycle optionally substituted by one or more substitutes selected from among the 1 to 10 C alkyl and alcoxy groups and the halogen atoms.

**10.** Sulfonated polyimide as mentioned in Claim 8, in which the divalent group mentioned is selected from among:

- a divalent group derived from a linear or branched alkyl group with 1 to 10 C optionally substituted, by one or more halogens selected from among F, Cl, Br, and I and/or by one or more hydroxyl groups:

- a heteroatom selected from among O, S;

- a group

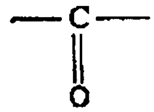

;

- a group

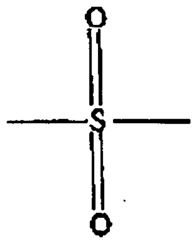

;

- a group

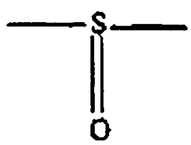

;

- a group

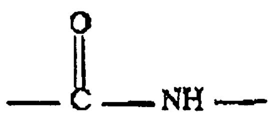

;

- a group

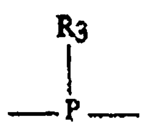

;

- a group

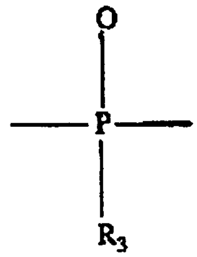

;

- a group

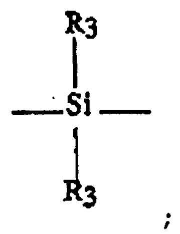

;

- a group

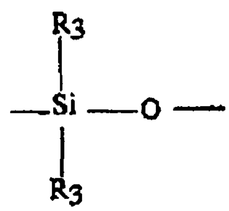

;

- a group

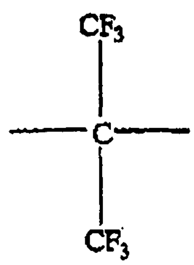

;

- a group

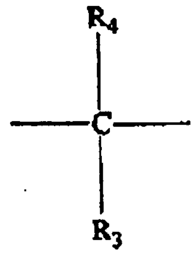

;

where $R_3$ and $R_4$ are selected from among the alkyl groups of 1 to 10 C such as methyl, ethyl, and isopropyl, etc.

**11.** Sulfonated polyimides mentioned in Claim 8, in which $C_1$ is a benzenic ring, and $C_2$ is a set of two benzenic rings linked by an oxygen bridge between them.

**12.** Sulfonated polyimide as mentioned in Claim 8, in which $C_1$ is comprised of benzenic cycles linked by one or more perfluoroalkylene groups and $C_2$ is comprised of benzenic rings linked by one or more divalent perfluoroalkyl groups or perfluoroalkylenes.

**13.** Sulfonated polyimide as mentioned in Claim 8, in which $C_1$ is a benzenic ring and $C_2$ is a naphthalene cycle.

**14.** Sulfonated polyimide as mentioned in Claim 8, in which $C_1$ and $C_2$ are both naphtalenic cycles.

**15.** Sulfonated polyimide as mentioned in Claim 8, in which $Ar_1$ is a diphenyl methane group, and $C_2$ is a biphenyl disulfonic.

**16.** Sulfonated polyimide as mentioned in Claim 8, in which $Ar_1$ is a benzenic group and $Ar_2$ is a biphenyl disulfonic.

**17.** Process as mentioned in Claim 8, in which Ar1 is a diphenyl ether group and $Ar_2$ is a biphenyl disulfonic group.

**18.** Membrane comprising a sulfonated polyimide as mentioned in any one of Claims 1 through 17.

**19.** Fuel cell device comprising at least one membrane as mentioned in Claim 18.

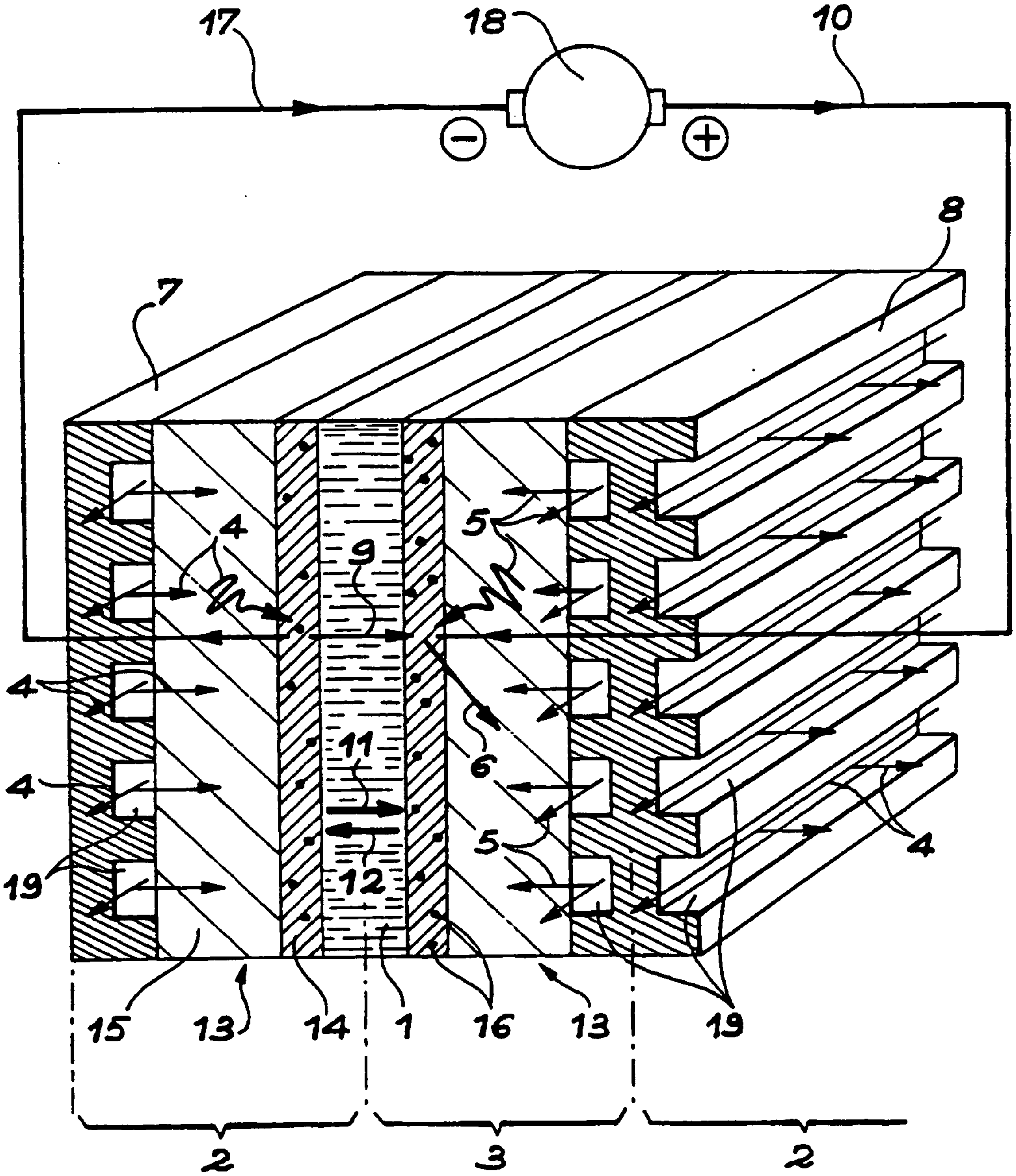


FIG. 1

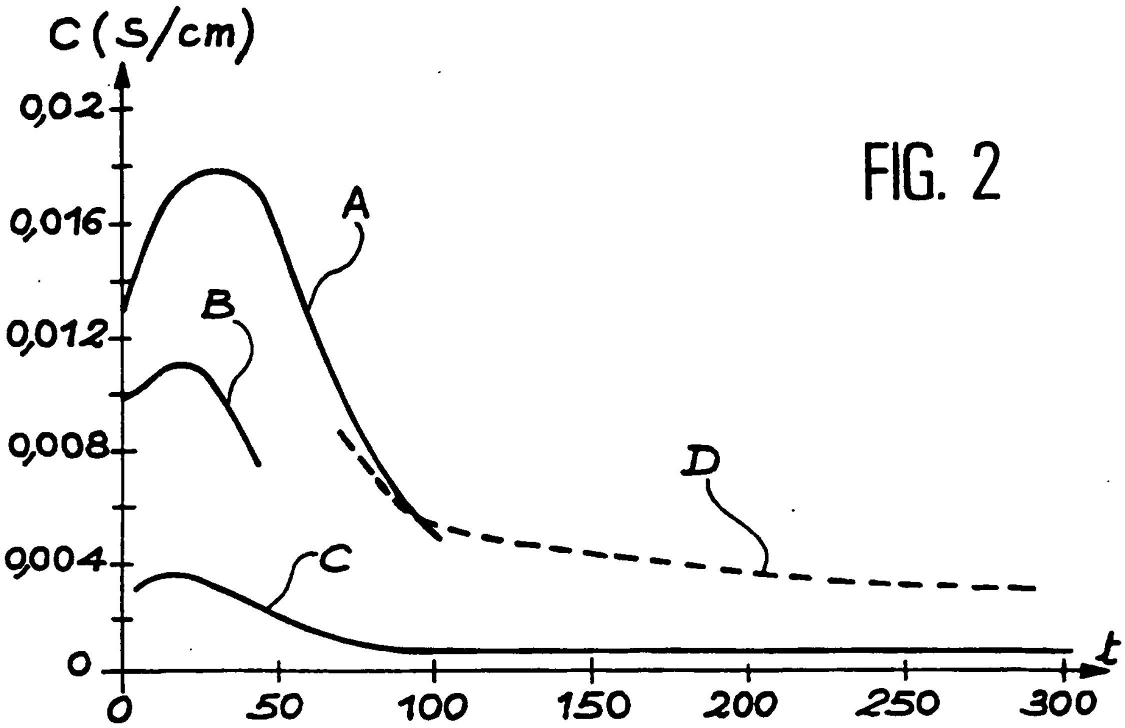
C (S/cm)
0,02
0,016
0,012
0,008
0,004
0
A
B
C
D
t
0
50
100
150
200
250
300

FIG. 2

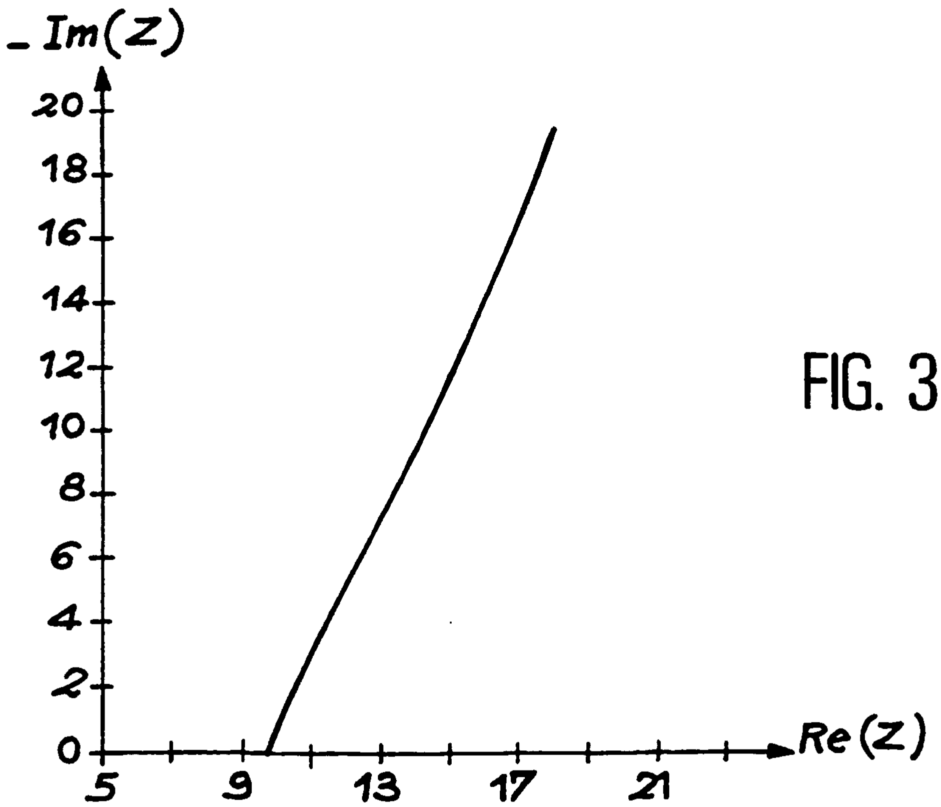
- Im(Z)
20
18
16
14
12
10
8
6
4
2
0
Re(Z)
5
9
13
17
21

FIG. 3

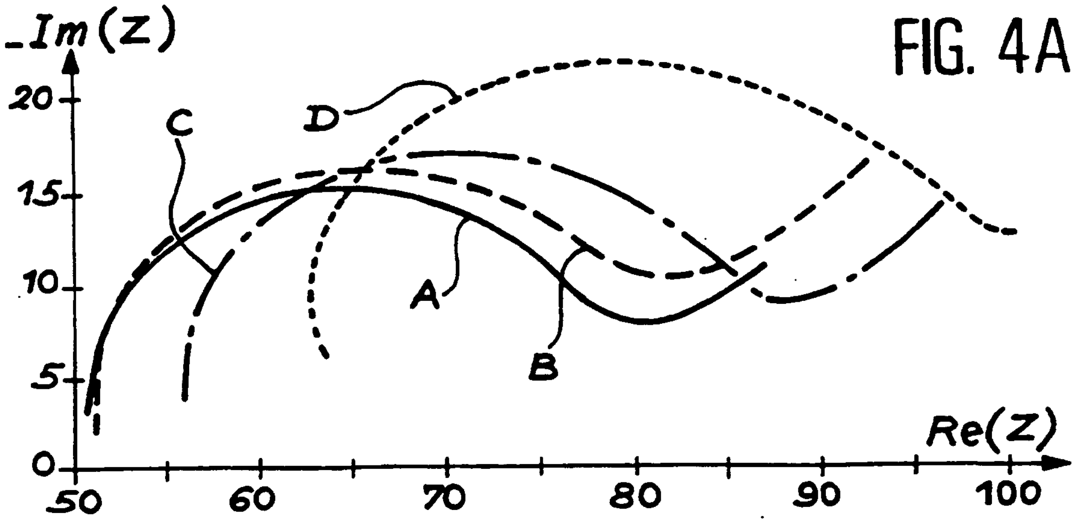


FIG. 4A

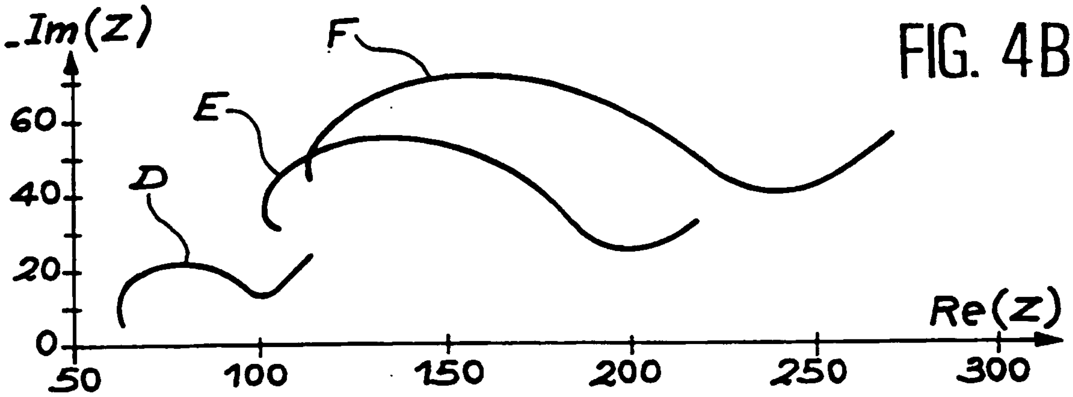


FIG. 4B

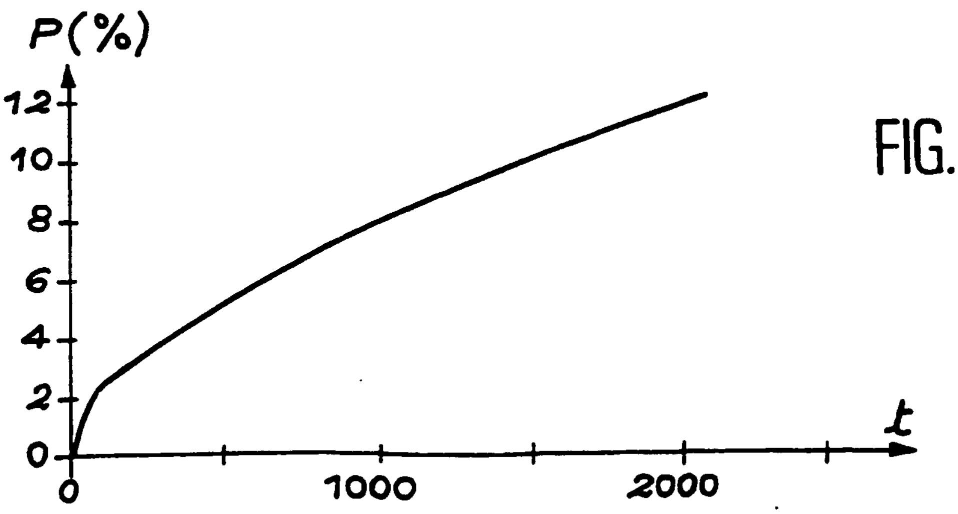


FIG. 5